(19) Europäisches Patentamt
European Patent Office
Office européen des brevets

(11) EP 4 647 137 A1

(12) **EUROPEAN PATENT APPLICATION**
published in accordance with Art. 153(4) EPC

(43) Date of publication:
**12.11.2025 Bulletin 2025/46**

(21) Application number: **24813837.2**

(22) Date of filing: **20.03.2024**

(51) International Patent Classification (IPC):
**A63F 13/52** (2014.01)   **G06F 1/3234** (2019.01)

(52) Cooperative Patent Classification (CPC):
**A63F 13/52; A63F 13/77; G06F 1/3234; G06F 9/50**

(86) International application number:
**PCT/CN2024/082700**

(87) International publication number:
**WO 2024/244631 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.05.2023   CN 202310622478**

(71) Applicant: **Honor Device Co., Ltd.
Shenzhen, Guangdong 518040 (CN)**

(72) Inventor: **LIAO, Canjie
Shenzhen, Guangdong 518040 (CN)**

(74) Representative: **MERH-IP Matias Erny Reichl
Hoffmann
Patentanwälte PartG mbB
Paul-Heyse-Straße 29
80336 München (DE)**

(54) **FRAME RATE CONTROL METHOD AND RELATED APPARATUS**

(57)    This application provides a frame rate control method and a related apparatus. When a frame control condition is not satisfied, a SurfaceFlinger may be controlled by a frame stability service module to receive, at a first frame rate, a frame sending instruction sent by an application. When the frame control condition is satisfied, the SurfaceFlinger may be controlled by the frame stability service module to receive, at the second frame rate less than the first frame rate, the frame sending instruction sent by the application. In this way, when the frame control condition is satisfied, a frame rate at which the frame sending instruction generated by the application is sent to the SurfaceFlinger is reduced, thereby reducing, within a specific time, the number of times the application triggers rendering of an image frame and sending of the image frame. Therefore, power consumption of an electronic device is reduced.

FIG. 6A

## Description

This application claims priority to Chinese Patent Application No. 202310622478.7, filed with the China National Intellectual Property Administration on May 29, 2023 and entitled "FRAME RATE CONTROL METHOD AND RELATED APPARATUS", which is incorporated herein by reference in its entirety.

## TECHNICAL FIELD

This application relates to the field of terminal technologies, and in particular, to a frame rate control method and a related apparatus.

## BACKGROUND

With the further expansion of the application market on electronic devices, some application vendors (for example, vendors of gaming applications) have started to use technologies such as real physics engines, high-precision rendering, and the like in applications. This also puts forward higher requirements for the performance of the electronic devices. Therefore, the electronic device also dispatches more system resources such as processing capacity, storage capacity, and the like to complete rendering, composition, and displaying of image frames of the application. This further causes high power consumption for the electronic device. As a result, the generated heat is increased, which affects the experience of a user using the application.

## SUMMARY

This application provides a frame rate control method and a related apparatus, to reduce, when a frame control condition is satisfied, a frame rate at which a frame sending instruction of an application is sent to a SurfaceFlinger is reduced, thereby reducing power consumption of an electronic device.

According to a first aspect, this application provides a frame rate control method. The method is applied to an electronic device, where the electronic device includes a frame stability service module, the frame stability service module is located between an application layer and a layer compositor SurfaceFlinger, and a first application is installed in the electronic device. The method includes: The first application generates a frame sending instruction; and when the electronic device does not satisfy a frame control condition, the frame sending instruction generated by the first application is forwarded by the frame stability service module to the SurfaceFlinger at a first frame rate, where the frame sending instruction is configured to provide a layer buffer buffer of an image frame to the SurfaceFlinger, the buffer is configured to store an image frame rendered by a GPU, the SurfaceFlinger is configured to perform, after obtaining the frame sending instruction, composition and display sending of an image frame in the buffer indicated by the frame sending instruction; or when the electronic device satisfies the frame control condition, the frame sending instruction generated by the first application is forwarded by the frame stability service module to the SurfaceFlinger at a second frame rate, where the first frame rate is greater than the second frame rate, the frame control condition includes that an image frame rate set by the first application is a full frame rate, the first frame rate is less than or equal to the full frame rate, and the full frame rate is a maximum refresh rate of an image frame supported by the first application.

Through the frame rate control method provided in this application, when the frame control condition is not satisfied, the SurfaceFlinger is controlled by the frame stability service module to receive, at the first frame rate, the frame sending instruction sent by the application. When the frame control condition is satisfied, the SurfaceFlinger is controlled by the frame stability service module to receive, at a second frame rate less than the first frame rate, the frame sending instruction sent by the application. In this way, when the frame control condition is satisfied, the frame rate at which the frame sending instruction generated by the application is sent to the SurfaceFlinger is reduced, thereby reducing, the number of times the application triggers, within a specific time, rendering of the image frame and sending of the image frame. Therefore, power consumption of the electronic device is reduced.

In a possible implementation, the method further includes: The frame sending instruction generated by the first application is obtained by the frame stability service module from a graphics interface, where the graphics interface includes any one of the following: an open graphics library OpenGL, an open graphics library OpenGL ES for an embedded system, and a drawing application interface Vulkan.

In this way, the first application does not need to be improved, and is suitably applied to the frame stability service module. Therefore, a frame sending rate can be controlled by the frame stability service module without perception of the first application. This reduces power consumption of the electronic device.

In a possible implementation, the frame control condition further includes: A temperature of the electronic device is higher than a specified temperature threshold, a power level of the electronic device is lower than a specified power level, an occupancy rate of a central processing unit CPU of the electronic device is greater than a specified occupancy rate, and/or, the first application is a gaming application.

In this way, when the temperature is high, power is low, and/or the occupancy rate of the CPU is high, the electronic device may further control the frame rate at which the SurfaceFlinger obtains the frame feeding instruction, to reduce power consumption of the electronic device in a plurality of scenarios.

In a possible implementation, when the frame sending instruction generated by the first application is forwarded by the frame stability service module to the SurfaceFlinger at the second frame rate, the method further includes: Composition and display sending of N image frames are performed by the SurfaceFlinger at the first frame rate, where the N image frames include M predictive image frames, and the M predictive image frames are generated based on a historical image frame.

In this way, after the frame rate at which the SurfaceFlinger obtains the frame sending instruction to the second frame rate, the SurfaceFlinger may perform, at the first frame rate in a frame compensation manner, composition and display sending of the image frame. Therefore, when power consumption of the electronic device is reduced, the SurfaceFlinger is prevented from losing frames.

In a possible implementation, M is a difference between the first frame rate and the second frame rate.

In this way, after the frame rate at which SurfaceFlinger obtains the frame sending instruction is reduced to the second frame rate, the frame rate at which SurfaceFlinger performs composition and display sending remains at the first frame rate unchanged. This ensures smoothness of the frame rate when composition and display sending are performed.

In a possible implementation, that the frame sending instruction generated by the first application is forwarded by the frame stability service module to the SurfaceFlinger at a first frame rate specifically includes: When a first frame sending instruction generated by the first application is obtained by the frame stability service module, the first frame sending instruction is forwarded by the frame stability service module to the SurfaceFlinger; and after the first frame sending instruction is forwarded by the frame stability service module to the SurfaceFlinger, when the frame stability service module obtains a second frame sending instruction generated by the first application, the second frame sending instruction is forwarded by the frame stability service module to the SurfaceFlinger.

In this way, when the frame control condition is not satisfied, the frame stability service module may immediately forward the frame sending instruction to the SurfaceFlinger when obtaining the frame sending instruction generated by the first application, thereby ensuring that the frame sending instruction can arrive at the SurfaceFlinger in a timely manner.

In a possible implementation, that the frame sending instruction generated by the first application is forwarded by the frame stability service module to the SurfaceFlinger at a second frame rate specifically includes: When a third frame sending instruction generated by the first application is obtained by the frame stability service module, the third frame sending instruction is forwarded by the frame stability service module to the SurfaceFlinger; after the third frame sending instruction is forwarded by the frame stability service module to the SurfaceFlinger, a fourth frame sending instruction generated by the first application is obtained by the frame stability service module; and after the frame stability service module obtains the fourth frame sending instruction generated by the first application, forwarding the fourth frame sending instruction to the SurfaceFlinger is delayed by the frame stability service module.

In this way, when the frame control condition is satisfied, when obtaining some frame sending instructions generated by the first application, the frame stability service module may delay forwarding some frame sending instructions to the SurfaceFlinger. This reduces a frame rate at which the frame sending instruction arrives at the SurfaceFlinger, and reduces power consumption of the electronic device.

In a possible implementation, after the frame stability service module obtains the fourth frame sending instruction generated by the first application, that forwarding the fourth frame sending instruction to the SurfaceFlinger is delayed by the frame stability service module specifically includes: A first time interval between a time point when the frame rate stabilization service module obtains the fourth frame-sending instruction and a time point when the frame rate stabilization service module obtains the third frame-sending instruction is determined by the frame stability service module; and if the first time interval is less than a first frame sending interval, after the frame stability service module obtains the fourth frame sending instruction, a first duration forwarding the fourth frame sending instruction to the SurfaceFlinger is delayed by the frame stability service module, where the first frame sending interval is a frame control cycle, the frame control cycle is a reciprocal of the second frame rate, and the first duration is a difference between the first frame sending interval and the first time interval.

In this way, a delay duration of delaying forwarding the frame sending instruction to the SurfaceFlinger can be determined based on a frame control cycle corresponding to the second frame rate, to control the frame rate at which the SurfaceFlinger obtains the frame sending instruction at the second frame rate.

In a possible implementation, the method further includes: If the first time interval is greater than or equal to the first frame sending interval, when the frame stability service module obtains the fourth frame sending instruction, the fourth frame sending instruction is forwarded by the frame stability service module to the SurfaceFlinger.

In a possible implementation, the method further includes: After the frame stability service module delays forwarding the fourth frame sending instruction to the SurfaceFlinger, a fifth frame sending instruction generated by the first application is obtained by the frame stability service module; the frame stability service module determines a second time interval between a time point when the frame rate stabilization service module obtains the fifth frame-sending instruction and a time point when the frame rate stabilization service module obtains the fourth frame-sending instruction; and if the second time interval is less than a second frame sending interval, after the frame stability service module obtains the fifth frame sending instruction, a second duration forwarding the fifth frame sending instruction to the SurfaceFlinger is delayed by the frame stability service module, where the second duration is a difference between the second frame sending interval and the second time interval, and the second frame sending interval is determined based on the first time interval, the first frame sending interval, and the frame control cycle.

In this way, because a time point at which the application generates the frame sending instruction fluctuates and is not strictly generated and sent in a cyclical manner, the delay duration for forwarding the frame sending instruction to the SurfaceFlinger may be dynamically adjusted, to stabilize, at the second frame rate, the frame rate at which the SurfaceFlinger obtains the frame sending instruction.

In a possible implementation, the second frame sending interval is determined through the following formula:

$$TNb = \begin{cases} MIN\big(T1, TNa + (T1 - Ta)\big), Ta < T1 \text{ and } TNa < T1 \\ TNa, Ta < T1 \text{ and } TNa \geq T1 \\ MAX\big(0, TNa - (Ta - TNa)\big), Ta \geq T1 \end{cases}$$

where Ta is the first time interval, T1 is the frame control cycle, TNa is the first frame sending interval, and TNb is the second frame sending interval.

In this way, according to the above formula, whether each frame sending instruction is delayed and how long each frame sending instruction is delayed can be dynamically determined, and the frame rate at which the SurfaceFlinger obtains the frame feed command to stabilize can be stabilized at the second frame rate.

In a possible implementation, the method further includes: After the frame stability service module forwards the third frame sending instruction to the SurfaceFlinger, when the SurfaceFlinger obtains a first vertical synchronization vsync signal, composition and display sending of an image frame in the buffer indicated by the third frame sending instruction is performed by the SurfaceFlinger; and after the frame stability service module forwards the fourth frame sending instruction to the SurfaceFlinger, when the SurfaceFlinger obtains a second VSYNC signal, composition and display sending of the image frame in the buffer indicated by the third frame sending instruction is performed by the SurfaceFlinger, where the second vsync signal is a next vsync signal of the first vsync signal.

In a possible implementation, the method further includes: If it is determined, by the frame stability service module, that no buffer of an image frame on which composition and display sending are not performed exists in the SurfaceFlinger when the SurfaceFlinger obtains a third vsync signal and an expected time point when the frame stability service module obtains the fifth frame sending instruction generated by the first application is later than a time point when the SurfaceFlinger obtains the third vsync signal, before the SurfaceFlinger obtains the third vsync signal, a first predictive image frame is generated by the frame stability service module based on the image frame in the buffer indicated by the third frame sending instruction and an image frame in the buffer indicated by the fourth frame sending instruction; the first predictive image frame is provided by the frame stability service module to the SurfaceFlinger; and when the SurfaceFlinger obtains the third vsync signal, composition and display sending of the first predictive image frame is performed by the SurfaceFlinger; where the third vsync signal is a next vsync signal of the second vsync signal, a difference between the time point when the SurfaceFlinger obtains the third vsync signal and a time point when the SurfaceFlinger obtains the second vsync signal is equal to the difference between the time point when the SurfaceFlinger obtains the second vsync signal and a time point when the SurfaceFlinger obtains the first vsync signal.

In this way, a frame loss time point can be predicted in advance, and a predictive image frame may be compensated based on a historically rendered image frame before the frame loss time point, and may be sent to the SurfaceFlinger. This prevents the SurfaceFlinger from losing the frames when composition and display sending are performed.

According to a second aspect, this application provides an electronic device, including one or more processors, and one or more memories, where the one or more memories are coupled to the one or more processors, the one or more memories are configured to store computer program code, and the computer program code includes computer instructions, and when the one or more processors execute the computer instructions, the method according to any possible implementation of the first aspect is enabled to be performed.

According to a third aspect, this application provides another electronic device, including one or more functional modules, where the one or more functional modules are configured to perform the method according to the first aspect and any possible implementation of the first aspect.

According to a fourth aspect, this application provides a chip system, where the chip system includes a processing circuit and an interface circuit, the interface circuit is configured to receive instructions and transmit the instructions to the processing circuit, and the processing circuit is configured to run the instructions to perform the method according to the first aspect and any possible implementation of the first aspect.

According to a fifth aspect, this application provides a computer-readable storage medium, including instructions, where when the instructions are run on an electronic device, the method according to the first aspect and any possible implementation of the first aspect is enabled to be performed.

According to a sixth aspect, an embodiment of this application provides a computer program product, where when the computer program product is run on a computer, the computer is enabled to perform the method according to first aspect and any one possible implementation of the first aspect.

For beneficial effects of the second aspect to the sixth aspect, refer to the beneficial effects of the first aspect and any one possible implementation of the first aspect, and details are not described herein again.

## BRIEF DESCRIPTION OF THE DRAWINGS

FIG. 1 is a diagram of a structure of an electronic device according to an embodiment of this application;
FIG. 2 is a time-sequence diagram of rendering to display sending of an image frame according to an embodiment of this application;
FIG. 3 is a time-sequence diagram of rendering to display sending of an image frame when a frame rate is controlled according to an embodiment of this application;
FIG. 4 is a diagram of a principle of a frame rate control method according to an embodiment of this application;
FIG. 5 is a schematic diagram of a software system architecture of an electronic device according to an embodiment of this application; and
FIG. 6A is a schematic diagram of a process for interacting via a software system architecture of an electronic device according to an embodiment of this application;
FIG. 6B is a schematic diagram of another process for interacting via a software system architecture of an electronic device according to an embodiment of this application;
FIG. 7 is a schematic diagram of a frame control process according to an embodiment of this application;
FIG. 8 is a time-sequence diagram of frame rate control according to an embodiment of this application;
FIG. 9 is a schematic diagram of a frame loss prediction process according to an embodiment of this application;
FIG. 10 is a time-sequence diagram of frame rate control according to an embodiment of this application;
FIG. 11 is a schematic diagram of a frame compensation process according to an embodiment of this application;
FIG. 12 is a schematic diagram of frame compensation according to an embodiment of this application; and
FIG. 13 is a schematic flowchart of a frame rate control method according to an embodiment of an application.

## DETAILED DESCRIPTION OF EMBODIMENTS

The following clearly and completely describes technical solutions in embodiments of this application with reference to the accompanying drawings. In descriptions of the embodiments of this application, unless otherwise stated, "/" indicates a meaning of "or". For example, A/B may indicate A or B. "And/Or" in the specification is merely used to describe an association relationship between associated objects, and indicates that three relationships may exist. For example, "A and/or B" may indicate that there are three cases: Only A exists, both A and B exist, and only B exists. In addition, in the descriptions of the embodiments of this application, "a plurality of" means two or more.

In the following, the terms "first" and "second" are only used for description purposes, and cannot be understood as indicating or implying relative importance or implicitly indicating a quantity of indicated technical features. Therefore, a feature defined to be "first" or "second" may explicitly or implicitly include one or more features. In the descriptions of embodiments of this application, unless otherwise stated, "a plurality of" means two or more than two.

A hardware structure of an electronic device provided in the embodiments of this application is described below.

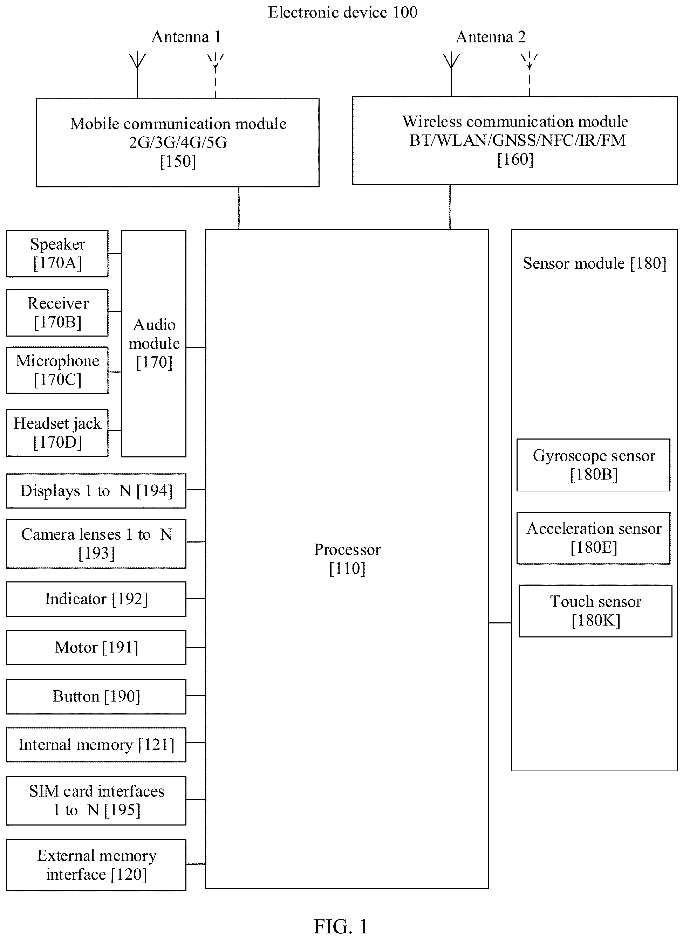

FIG. 1 is a schematic diagram of a structure of an electronic device 100 according to an embodiment of this application.

It should be understood that the electronic device 100 shown in FIG. 1 is merely an example, and the electronic device 100 may have more or fewer components than those shown in FIG. 1, may combine two or more components, or may have different component configurations. The components shown in FIG. 1 may be implemented in hardware that includes one or more signal processors and/or application-specific integrated circuits, software, or a combination of hardware and software.

The electronic device 100 may include a processor 110, an external memory interface 120, an internal memory 121, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identification module (subscriber identification module, SIM) card interface 195, and the like. The sensor module 180 may include a gyroscope sensor 180B, an acceleration sensor 180E, a touch sensor 180K, and the like.

It can be understood that the structure illustrated in embodiments of the present invention does not constitute a specific limitation on the electronic device 100. In some other embodiments of this application, the electronic device 100 may include more or fewer components than those shown in the figure, or combine some components, or split some components, or have a different component arrangement. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be separate devices, or may be integrated into one or more processors.

The controller may be a nerve center and a command center of the electronic device 100. The controller may generate an operation control signal according to instruction operation code and a timing signal, and control obtaining and executing of instructions.

A memory may also be disposed in the processor 110, and is configured to store instructions and data. In some embodiments, the memory of the processor 110 is a cache. The memory may store instructions or data that is just used or used cyclically by the processor 110. If the processor 110 needs to use the instructions or the data again, the processor 110 may directly invoke the instructions or the data from the memory. This avoids repeated accessing and reduces waiting time of the processor 110, thereby improving system efficiency.

A wireless communication function of the electronic device 100 may be implemented via the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed to improve antenna utilization. For example, the antenna 1 may be multiplexed as a diversity antenna of a wireless local area network. In some other embodiments, the antennas may be used in combination with a tuning switch.

The mobile communication module 150 may provide a wireless communication solution that includes 2G/3G/4G/5G or the like and that is applied to the electronic device 100. The mobile communication module 150 may include at least one filter, switch, power amplifier, low noise amplifier (low noise amplifier, LNA), and the like. The mobile communication module 150 may receive an electromagnetic wave by using the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some function modules of the mobile communication module 150 may be arranged in the processor 110. In some embodiments, at least some of the functional modules of the mobile communication module 150 may be disposed in a same device as at least some of modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the demodulated low-frequency baseband signal to the baseband processor for processing. After being processed by the baseband processor, the low-frequency baseband signal is transmitted to the application processor. The application processor outputs a sound signal through an audio device (which is not limited to a speaker 170A, a receiver 170B, and the like), or displays an image or a video through the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that is applied to the electronic device 100 and that includes wireless local area networks (wireless local area networks, WLAN) (for example, a wireless fidelity (wireless fidelity, Wi-Fi) network), bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave by using the antenna 2, performs frequency modulation on the electromagnetic wave signal and filters the electromagnetic wave signal, and sends a processed signal to the processor 110. The wireless communication module 160 may also receive a to-be-sent signal from the processor 110, perform frequency modulation on and amplify the to-be-sent signal, and convert the to-be-sent signal into an electromagnetic wave by using the antenna 2 for radiation.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include global system for mobile communications (global system for mobile communications, GSM) technology, a general packet radio service (general packet radio service, GPRS) technology, a code division multiple access (code division multiple access, CDMA) technology, a wideband code division multiple access (wideband code division multiple access, WCDMA) technology, a time-division code division multiple access (time-division code division multiple access, TD-SCDMA) technology, a long term evolution (long term evolution, LTE) technology, a BT technology, a GNSS technology, a WLAN technology, an NFC technology, an FM technology, an IR technology, and/or the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or satellite based augmentation systems (satellite based augmentation systems, SBAS).

The electronic device 100 may implement a display function by using the GPU, the display 194, the application processor, and the like. The GPU is a microprocessor for image processing and connects the display 194 to the application processor. The GPU is configured to perform mathematical and geometric computing for graphics rendering. The processor 110 may include one or more GPUs, and the one or more GPUs execute program instructions to generate or change displayed information.

The display 194 is configured to display an image, a video, or the like. The display 194 may include a display panel. The display panel may use a liquid crystal display (liquid crystal display, LCD). Alternatively, the display panel may be manufactured by using an organic light-emitting diode (organic light-emitting diode, OLED), an active-matrix organic light emitting diode (active-matrix organic light emitting diode, AMOLED), a flexible light-emitting diode (flex light-emitting diode, FLED), a mini LED, a micro LED, a micro OLED, quantum dot light emitting diodes (quantum dot light emitting diodes, QLED), or the like. In some embodiments, the electronic device 100 may include 1 or N displays 194, and N is a positive integer greater than 1.

The electronic device 100 may implement a shooting function through the ISP, the camera 193, the video codec, the GPU, the display 194, the application processor, and the like.

The ISP is used to process data fed back by camera 193. For example, during photographing, a shutter is pressed, and light is transmitted to a photosensitive element of the camera through a lens. An optical signal is converted into an electrical signal. The photosensitive element of the camera lens transmits the electrical signal to the ISP for processing, so that the ISP converts the electrical signal into an image visible to naked eyes. The ISP may further optimize noise point, brightness, and skin tone algorithms. The ISP may further optimize parameters such as exposure and a color temperature of a shooting scenario. In some embodiments, the ISP may be provided in the camera lens 193.

The camera 193 is configured to capture a still image or video. An optical image is generated for an object through the lens and is projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193. N is a positive integer greater than 1.

The digital signal processor is configured to process a digital signal, and may further process another digital signal in addition to the digital image signal. For example, when the electronic device 100 performs frequency selection, the digital signal processor is configured to perform Fourier transform or the like on frequency energy.

The video encoder and decoder are configured to compress or decompress a digital video. The electronic device 100 may support one or more types of video encoders and decoders. In this case, the electronic device 100 may play or record videos in a plurality of coding formats, such as moving picture experts group (moving picture experts group, MPEG) 1, MPEG2, MPEG3, and MPEG4.

The NPU is a neural-network (neural-network, NN) computing processor. The NPU quickly processes input information with reference to a structure of a biological neural network, for example, a transfer mode between human brain neurons, and may further continuously perform self-learning. The NPU may be used to implement an application such as intelligent cognition of the electronic device 100, for example, image recognition, facial recognition, voice recognition, and text understanding.

The external memory interface 120 may be configured to be connected to an external storage card, for example, a micro SD card, to extend a storage capability of the electronic device 100. The external storage card communicates with the processor 110 via the external memory interface 120, to implement a data storage function, for example, files such as music and a video are stored in the external memory card.

The internal memory 121 may be configured to store computer-executable program code, and the computer-executable program code includes instructions. The processor 110 runs the instructions stored in the internal storage 121, to perform various function applications and data processing of the electronic device 100. The internal memory 121 may include a program storage area and a data storage area. The program storage area may store an operating system, an application required by at least one function (such as a sound playback function and an image display function), and the like. The data storage area may store data (such as audio data and a phone book) and the like created when the electronic device 100 is used. In addition, the internal memory 121 may include a high-speed random access memory, and may further include a nonvolatile memory, for example, at least one magnetic disk storage device, a flash memory, or a universal flash storage (universal flash storage, UFS).

The electronic device 100 may implement audio functions such as music playing and sound recording, by using the audio module 170, the speaker 170A, the receiver 170B, the microphone 170C, the headset jack 170D, the application processor, and the like.

The audio module 170 is configured to convert digital audio information into an analog audio signal output, and also configured to convert an analog audio input into a digital audio signal. The audio module 170 may be further configured to encode and decode audio signals. In some embodiments, the audio module 170 may be disposed in the processor 110, or some functional modules in the audio module 170 may be disposed in the processor 110.

The speaker 170A, also referred to as a "loudspeaker", is configured to convert an audio electrical signal into a sound signal. The electronic device 100 may be used to listen to music or answer a call in a hands-free mode by using the speaker 170A.

The receiver 170B, also referred to as "earpiece", is configured to convert an electrical audio signal into a sound signal. When the electronic device 100 is configured to answer a call or receive speech information, the receiver 170B may be put close to a human ear to answer speech.

The microphone 170C, also referred to as a "mic" or a "mike", is configured to convert a sound signal into an electrical signal. When making a call or sending speech information, a user may make a sound approaching the microphone 170C through the mouth, to input a sound signal into the microphone 170C. At least one microphone 170C may be arranged in the electronic device 100. In some other embodiments, two microphones 170C may be disposed in the electronic device 100, to acquire a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The gyroscope sensor 180B may be configured to determine a motion posture of the electronic device 100. In some embodiments, angular velocities of the electronic device 100 around three axes (which are x, y, and z axes) may be determined by using the gyroscope sensor 180B. The gyroscope sensor 180B may be configured to image stabilization during photographing. For example, when the shutter is pressed, the gyroscope sensor 180B detects an angle at which the electronic device 100 jitters, and calculates, based on the angle, a distance for which a lens module needs to compensate, and allows the lens to cancel the jitter of the electronic device 100 through reverse motion, thereby implementing image stabilization. The gyroscope sensor 180B may also be used in navigation and a motion sensing game scene.

The acceleration sensor 180E may detect magnitudes of acceleration in various directions (usually on three axes) of the electronic device 100. When the electronic device 100 is stationary, a magnitude and a direction of gravity may be measured. The acceleration sensor may be further configured to recognize a posture of the electronic device, and is used in screen switching between a landscape mode and a portrait mode, a pedometer, or another application.

The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation on or near the touch sensor. The touch sensor may transfer the detected touch operation to the application processor to determine a type of a touch event. A visual output related to the touch operation may be provided through the display 194. In some other embodiments, the touch sensor 180K may alternatively be disposed on the surface of the electronic device 100 at a position different from that of the display 194.

The key 190 includes a power key, a volume key, and the like. The key 190 may be a mechanical key, or may be a touch key. The electronic device 100 may receive key input, and generate key signal input related to user settings and function control of the electronic device 100. The motor 191 may generate a vibration prompt. The SIM card interface 195 is configured to connect a SIM card. The SIM card may be inserted into the SIM card interface 195 or plugged from the SIM card interface 195, to come into contact with or be separated from the electronic device 100.

In this embodiment of this application, a device type of the electronic device 100 may be any one of a mobile phone, a tablet computer, a handheld computer, a desktop computer, a laptop computer, an ultra-mobile personal computer (ultra-mobile personal computer, UMPC), a netbook, a cellular phone, a personal digital assistant (personal digital assistant, PDA), smart home devices such as a smart large-screen device, a smart speaker, and the like, wearable devices such as a smart bracelet, a smart watch, smart glasses, and the like, extended reality (extended reality, XR) devices such as an augmented reality (augmented reality, AR) device, a virtual reality (virtual reality, VR) device, a mixed reality (mixed reality, MR) device, and the like, a vehicle-mounted device, a smart city device, or the like.

The following describes a process from rendering to display sending of an image frame.

First, the following describes some terminology concepts involved in the rendering to the display sending of the image frame in embodiments of this application.

1. Screen refresh rate (refresh rate): It indicates the number of times within 1 second an image frame is refreshed and displayed on a display of an electronic device. Generally, a refresh rate of the display of the electronic device is related to a fixed parameter of the display and is a fixed value. For example, the refresh rate may be 60 hertz (Hz).

2. Rendering frame rate (frame rate): It indicates the number of image frames that are rendered within 1 second by a GPU invoked by a render thread of an application. The rendering frame rate may be controlled by the application.

3. Vertical synchronization (vsync) signal: An application needs to first invoke a GPU to render an image frame, stores a rendered image frame in a layer buffer (buffer), and provides the image frame to a layer compositor (SurfaceFlinger) for performing layer composition. Therefore, after taking the rendered image frame from the buffer and performing layer composition, the SurfaceFlinger sends, to a display for refreshing and displaying, an image frame on which layer composition is performed. In a screen refresh process, when the SurfaceFlinger sends, to the display, the image frame on which layer composition is performed, a front image frame and a rear image frame are easily overlapped in displaying, resulting in tearing of an image frame displayed on the display. Therefore, in order to avoid such image frame tearing, a corresponding hardware module of the display may generate a vsync signal of which a cycle is the same as a refresh rate, and may send the vsync signal to the SurfaceFlinger. After receiving the vsync signal each time, the SurfaceFlinger may take the image frame from the buffer for performing layer composition, and may send the image frame to the display for refreshing and displaying.

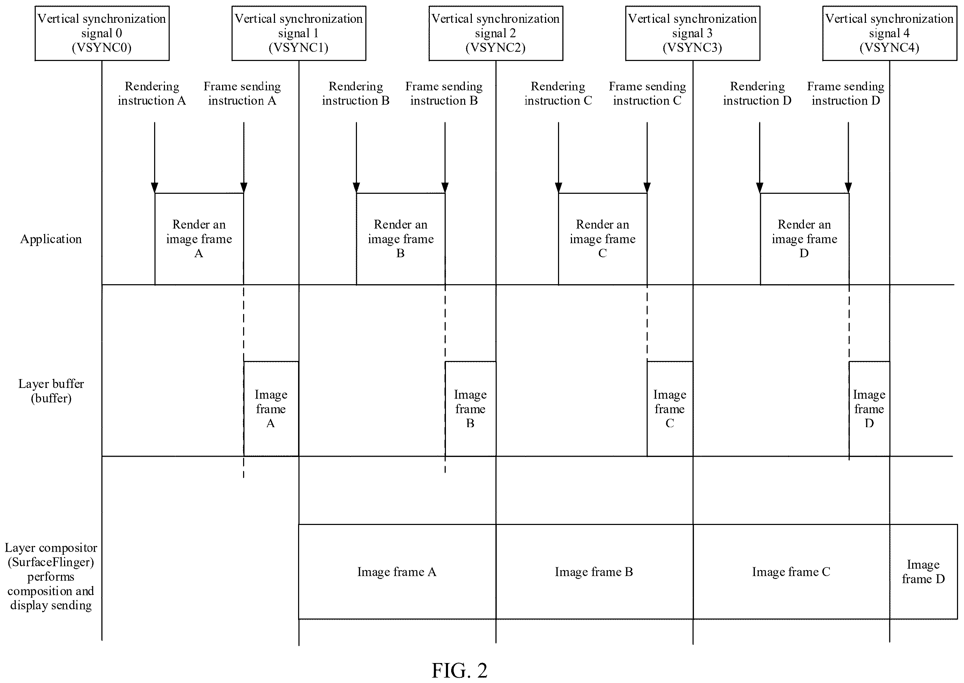

FIG. 2 illustrates a time-sequence diagram of rendering to display sending of an image frame according to an embodiment of this application.

As shown in FIG. 2, an application (for example, a game application) may send a rendering instruction to a GPU, to render an image frame. After sending the rendering instruction, the application may send a frame sending instruction of the image frame to a SurfaceFlinger. After the GPU renders the image frame, the GPU may store the image frame in a buffer indicated by the rendering instruction. After obtaining the frame sending instruction, the SurfaceFlinger may obtain the buffer of the image frame. After detecting that the buffer of the image frame is filled with the rendered image frame, when waiting until the arrival of a next vsync signal, the SurfaceFlinger may take the image frame from the buffer of the image frame for performing layer composition, and send the image frame to the display for refreshing and displaying.

For example, between a vertical synchronization signal 0 (VSYNC0) and a vertical synchronization signal 1 (VSYNC1), the application may send a rendering instruction A to the GPU, and may send a frame sending instruction to the SurfaceFlinger. After obtaining the rendering instruction A, the GPU may render an image frame A, and store the rendered image frame A in a buffer of the image frame A indicated by the rendering instruction A. The SurfaceFlinger may obtain the buffer of the image frame A based on the frame sending instruction A, after detecting that the buffer of the image frame is filled with the rendered image frame A, when waiting until the arrival of the VSYNC1, take the image frame A from the buffer of the image frame A for performing layer composition, and send the image frame A to the display for refreshing and displaying.

Between the vertical synchronization signal 1 (VSYNC1) and a vertical synchronization signal 2 (VSYNC2), the application may send a rendering instruction B to the GPU, and may send a frame sending instruction B to the SurfaceFlinger. After obtaining the rendering instruction B, the GPU may render an image frame B, and store the rendered image frame B in the buffer of the image frame B indicated by the rendering instruction B. The SurfaceFlinger may obtain the buffer of the image frame B based on the frame sending instruction B, after detecting that the buffer of the image frame is filled with the rendered image frame B and when waiting until the arrival of the VSYNC2, may take the image frame A from the buffer of the image frame B for performing layer composition, and sends the image frame B to the display for refreshing and displaying.

Between the vertical synchronization signal 2 (VSYNC2) and a vertical synchronization signal 3 (VSYNC3), the application may send a rendering instruction C to the GPU, and may send a frame sending instruction C to the SurfaceFlinger. After obtaining the rendering instruction C, the GPU may render an image frame C, and store the rendered image frame C in the buffer of the image frame C indicated by the rendering instruction C. The SurfaceFlinger may obtain the buffer of the image frame C based on the frame sending instruction C, after detecting that the buffer of the image frame is filled with the rendered image frame C and when waiting until the arrival of the VSYNC3, may take the image frame A from the buffer of the image frame C for performing layer composition, and sends the image frame C to the display

for refreshing and displaying.

Between the vertical synchronization signal 3 (VSYNC3) and a vertical synchronization signal 4 (VSYNC4), the application may send a rendering instruction D to the GPU, and may send a frame sending instruction D to the SurfaceFlinger. After obtaining the rendering instruction D, the GPU may render an image frame D, and store the rendered image frame D in the buffer of the image frame D indicated by the rendering instruction D. The SurfaceFlinger may obtain the buffer of the image frame D based on the frame sending instruction D, after detecting that the buffer of the image frame is filled with the rendered image frame D and when waiting until the arrival of the VSYNC4, may take the image frame A from the buffer of the image frame D for performing layer composition, and sends the image frame D to the display for refreshing and displaying.

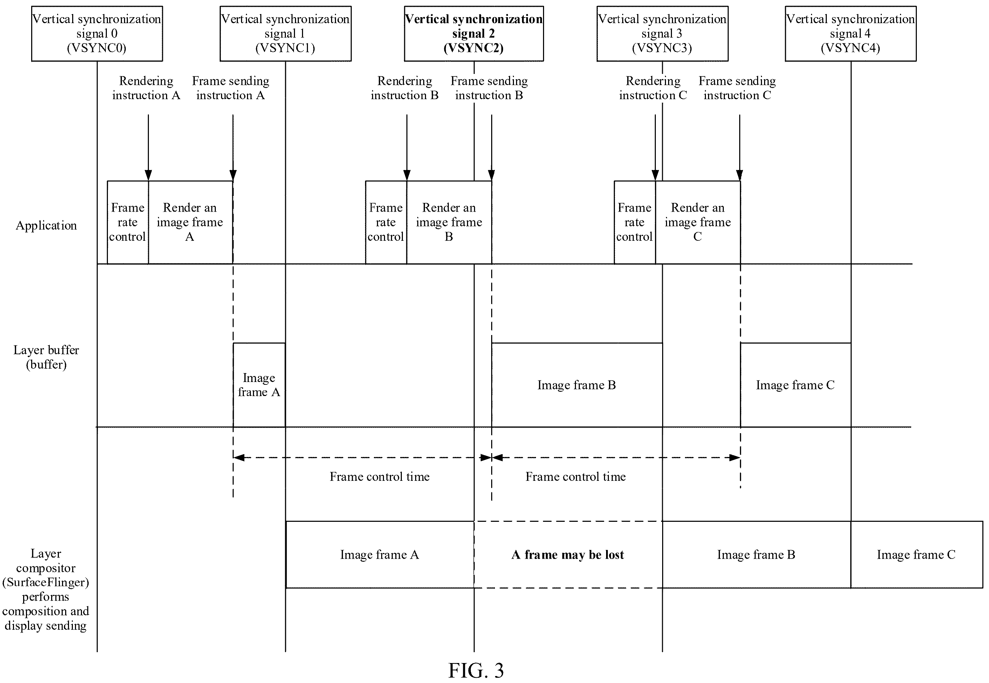

FIG. 3 illustrates a time-sequence diagram of rendering to display sending of an image frame when a frame rate is controlled according to an embodiment of this application.

As shown in FIG. 3, in consideration of reducing power consumption of an electronic device, a frame rate for rendering an image frame may be controlled, to reduce the frame rate for rendering the image frame. A frame rate control manner may be as follows: When a frame rate of an image frame needs to be reduced, an application may increase time of processing data of the image frame, to delay sending a rendering instruction to a GPU. In this way, the frame rate of the image frame can be controlled.

However, because the application delays sending the rendering instruction to the GPU, a time point at which the GPU completes rendering of a specific image frame is later, and a time point at which the application provides a buffer of the image frame to a SurfaceFlinger based on the frame sending instruction is later than a time point at which a vertical synchronization signal arrives. Consequently, the SurfaceFlinger cannot obtain the image frame for performing composition when the vertical synchronization signal arrives, resulting in a freeze of the image frame displayed on the display.

For example, between a vertical synchronization signal 0 (VSYNC0) and a vertical synchronization signal 1 (VSYNC1), the application may control the frame rate, and may delay sending a rendering instruction A to the GPU. After obtaining a rendering instruction A, the GPU may render an image frame A. After the GPU completes rendering of the image frame A, the application may send a buffer of the image frame A to the SurfaceFlinger. After obtaining the buffer of the image frame A and waiting until the arrival of the VSYNC 1, the SurfaceFlinger may take the image frame A from the buffer of the image frame A for performing layer composition, and may send the image frame A to a display for refreshing and displaying.

Between a vertical synchronization signal 1 (VSYNC1) and a vertical synchronization signal 2 (VSYNC2), the application may control the frame rate, and may delay sending a rendering instruction B to the GPU. After obtaining a rendering instruction B, the GPU may render an image frame B. However, when the VSYNC2 arrives, the GPU does not complete rendering of the image frame B. After the VSYNC2 arrives, the application sends a buffer of the image frame B to the SurfaceFlinger. When the VSYNC2 arrives, the SurfaceFlinger does not obtain the image frame for performing layer composition, and cannot send a latest image frame to the display. Therefore, if the display does not obtain a new image frame, the display displays the image frame A for two consecutive refresh cycles, resulting in a freeze of the displayed image frame.

Between the vertical synchronization signal 2 (VSYNC2) and a vertical synchronization signal 3 (VSYNC3), the application sends the buffer of the image frame B to the SurfaceFlinger based on the frame sending instruction B. After the application sends the buffer of the image frame B to the SurfaceFlinger based on the frame sending instruction B, the application may control the frame rate, and may delay sending a rendering instruction C to the GPU. After obtaining a rendering instruction C, the GPU may render an image frame C. After obtaining the buffer of the image frame B and waiting until the arrival of the VSYNC3, the SurfaceFlinger may take the image frame B from the buffer of the image frame B for performing layer composition, and may send the image frame B to the display for refreshing and displaying.

Between the vertical synchronization signal 3 (VSYNC3) and a vertical synchronization signal 4 (VSYNC4), the GPU completes rendering of the image frame C. After the GPU completes rendering of the image frame C, the application sends a buffer of the image frame C to the SurfaceFlinger based on a frame sending instruction C. After obtaining the buffer of the image frame C and waiting until the arrival of the VSYNC4, the SurfaceFlinger may take the image frame C from the buffer of the image frame C for performing layer composition, and may send the image frame C to the display for refreshing and displaying.

Through the above frame rate control manner, a frame control time is greater than an original rendering cycle, that is, after frame control, the rendering frame rate is less than the original frame rate. This reduces a frame rate at which the GPU renders the image frame, reduces the number of times GPU renders the image frame within a specific time period, and reduces power consumption of the electronic device. However, the image is frozen.

An embodiment of this application provides a frame rate control method. An electronic device may control a frame rate at which an image frame of an application (for example, a gaming application) is sent, to enable the frame rate to be slightly lower than an original frame rate specified by the application (for example, from an original 60 Hz to 58 Hz). This reduces a rendering load and a frame sending load, thereby reducing the use of system resources on the electronic device, and reducing power consumption of the electronic device. Optionally, the electronic device may predict a frame loss time point of the image frame in advance in a process of controlling the frame rate of the image frame of the application (for example, a gaming application). Before the frame loss time point of the image frame, in view of the process of generating the image frames by the application, a predictive image frame is generated with a plurality of previously rendered image frames in an active frame insertion manner with a low load, and is inserted into a queue of image frames. In this way, a display frame rate of the image frame on the display may also reach the original frame rate. Therefore, when the performance of the application is ensured, the load and power consumption of the electronic device are reduced.

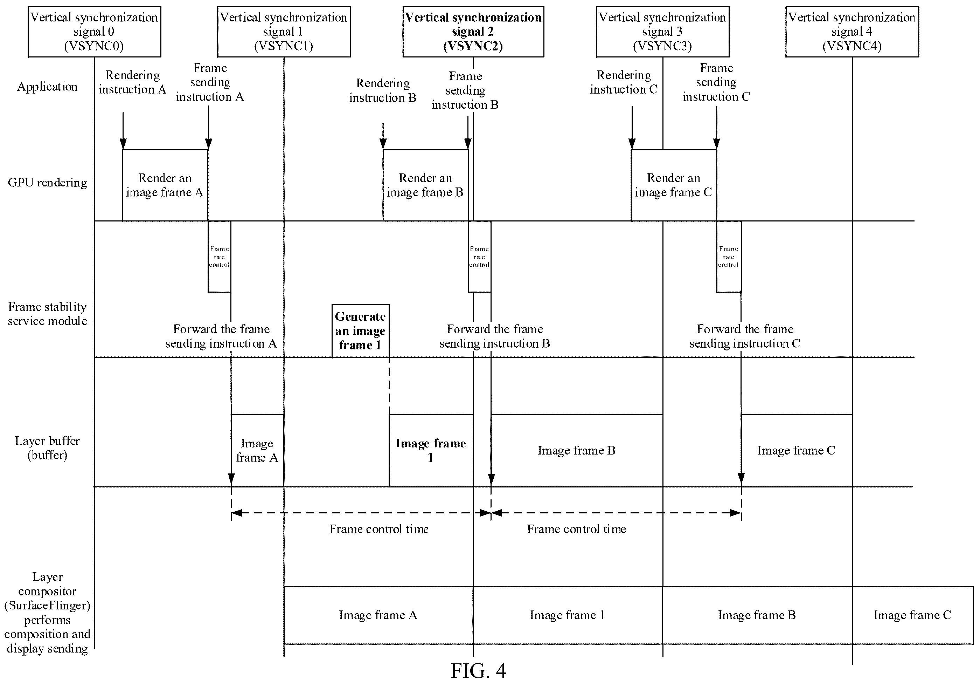

FIG. 4 illustrates a schematic diagram of a principle of a frame rate control method according to an embodiment of this application.

As shown in FIG. 4, an electronic device may obtain, by a frame stability service module, a rendering instruction and a frame sending instruction sent by an application, and may delay, for a specific time, sending a frame sending instruction sent by the application to a SurfaceFlinger. In this way, a frame rate of a rendered image frame can be controlled, to reduce a frame rate at which a GPU renders the image frame. Because sending the frame sending instruction of the application to the SurfaceFlinger is delayed by the frame stability service module, a time point at which the GPU completes rendering of a specific image frame is later. Therefore, in a cycle of a specific vsync signal, the SurfaceFlinger cannot obtain a composed layer of the image frame, and the SurfaceFlinger loses the image frame (referred to as "frame loss"). The electronic device may further predict a frame loss time point in a frame rate control process, may generate, before the frame loss time point arrives, a predictive image frame based on a historically rendered image frame, and may send, before the vsync signal arrives, the predictive image frame to the SurfaceFlinger. In this way, a display frame rate of the image frame on the display may also reach the original frame rate. Therefore, when the performance of the application is ensured, the load and power consumption of the electronic device are reduced.

For example, between a vertical synchronization signal 0 (VSYNC0) and a vertical synchronization signal 1 (VSYNC1), the application may sequentially send a rendering instruction A and a frame sending instruction A of an image frame A to the frame stability service module, and the frame stability service module sends the rendering instruction A to the GPU. Because the frame stability service module controls the frame rate of the rendered image frame, the frame stability service module may delay sending the frame sending instruction A to the SurfaceFlinger. After obtaining the rendering instruction A, the GPU may render the image frame A, and may store the image frame A in a buffer of the image frame A after rendering the image frame A. After obtaining the frame sending instruction A, the SurfaceFlinger may obtain the buffer of the image frame A. After detecting that the buffer of the image frame A is filled with the rendered image frame A, when waiting until the arrival of the VSYNC1 signal, the SurfaceFlinger may take the image frame A from the buffer of the image frame A for performing layer composition, and send the image frame to the display for refreshing and displaying.

Between a vertical synchronization signal 1 (VSYNC1) and a vertical synchronization signal 2 (VSYNC2), the application may send a rendering instruction B and a frame sending instruction B of an image frame B to the frame stability service module, and the frame stability service module sends the rendering instruction B to the GPU. Because the frame stability service module may control the frame rate of the rendered image frame, the frame stability service module may delay sending the frame sending instruction B to the SurfaceFlinger. After obtaining the rendering instruction B, the GPU may render the image frame B, and may store the image frame B in a buffer of the image frame B after rendering the image frame B. The frame stability service module may recognize that, between the vertical synchronization signal 1 (VSYNC1) and the vertical synchronization signal 2 (VSYNC2), because the SurfaceFlinger cannot obtain the image frame B, the frame stability service module can generate the image frame 1, store the image frame 1 in the buffer of the image frame 1, and send the image frame 1 to the SurfaceFlinger. Although the SurfaceFlinger cannot obtain the image frame B when the VSYNC2 arrives, the frame stability service module has sent the image frame 1 to the SurfaceFlinger before the VSYNC2 arrives. Therefore, when the VSYNC2 arrives, the SurfaceFlinger may take the image frame 1 for layer composition and display sending.

Between the vertical synchronization signal 2 (VSYNC2) and a vertical synchronization signal 3 (VSYNC3), the frame stability service module may send the frame sending instruction B to the SurfaceFlinger. After obtaining the buffer of the image frame B and waiting until the arrival of the VSYNC3, the SurfaceFlinger may take the image frame B from the buffer of the image frame B for performing layer composition, and may send the image frame B to the display for refreshing and displaying.

The application may send a rendering instruction C of an image frame C to the frame stability service module, and the frame stability service module sends the rendering instruction C to the GPU. After obtaining the rendering instruction C, the GPU may render the image frame C, and may store the image frame C in a buffer of the image frame C after rendering the image frame C.

Between the vertical synchronization signal 3 (VSYNC3) and a vertical synchronization signal 4 (VSYNC4), the application may send the frame sending instruction C of the image frame C to the frame stability service module. Because the frame stability service module controls the frame rate of the rendered image frame, the frame stability service module may delay sending the frame sending instruction C to the SurfaceFlinger. After obtaining the frame sending instruction C, the SurfaceFlinger may obtain the buffer of the image frame C. After detecting that the buffer of the image frame C is filled with the rendered image frame C, when waiting until the arrival of the VSYNC4, the SurfaceFlinger may take the image frame C from the buffer of the image frame C for performing layer composition, and send the image frame C to the display for refreshing and displaying.

Through the frame rate control method provided in this embodiment of this application, after the frame rate is controlled, a sum of total power consumption Power ($FPS_{real-limit}$) of generating the image frame and power consumption Power ($FPS_{ligntload}$) of generating a compensation frame is lower than total power consumption Power ($FPS_{real-max}$) of generating the image frame at an original frame rate, that is, Power ($FPS_{real-limit}$) + Power ($FPS_{ligntload}$) < Power ($FPS_{real-max}$).

The following describes a software system architecture of an electronic device according to an embodiment of this application.

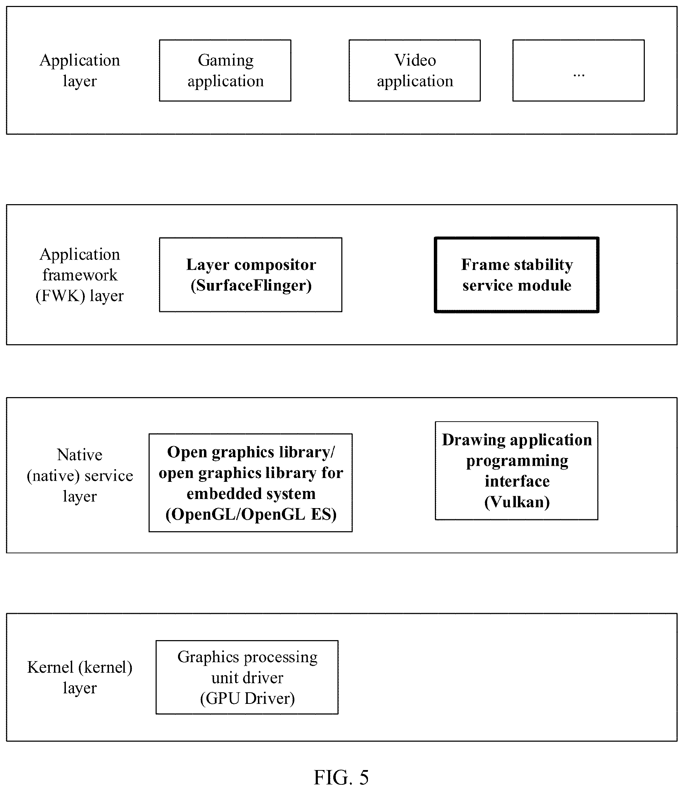

FIG. 5 illustrates a schematic diagram of a software system architecture of an electronic device according to an embodiment of this application.

As shown in FIG. 5, a software system architecture of an electronic device 100 may include an application (application, APP) layer, application frameworks (frameworks, FWK) layer, a native (native) service layer, and a kernel (kernel) layer.

The application layer includes one or more applications, for example, a gaming application, a video application, and the like. The application may be used to provide image content of the image frame, and invoke, by the frame stability service module, a graphics interface to configure the GPU to render the image frame based on the image content of the image frame.

The application framework layer may include a layer compositor (SurfaceFlinger), a frame stability service module, and the like. The SurfaceFlinger is used to: perform layer composition processing on the image frame rendered by the GPU, generate an interface including the image frames, and send the interface including the image frame to a display for displaying. The frame stability service module may be used to: control a frame rate at which the application invokes the GPU to render the image frame, recognize a frame loss time point in advance, and generate a predictive image frame before the frame loss time point, send the predictive image frame to the SurfaceFlinger, thereby avoid the freeze of the image frame displayed on the display.

The local service layer may include one or more graphics interfaces. The one or more graphics interfaces may include one or more of an open graphics library (open graphics library, OpenGL), open graphics library for embedded systems (open graphics library for embedded systems, OpenGL ES), and a drawing application program interface (Vulkan). The graphics interface may be used to configure the GPU to render the image frame.

The kernel layer may include a graphics processing unit driver (graphics processing unit driver, GPU Driver), and the like. The GPU Driver is used to drive the GPU to perform an upper-layer operation (for example, an operation of configuring a graphics interface to render the image frame).

The following describes a process of interaction between modules in the software system architecture by using a gaming application as an example.

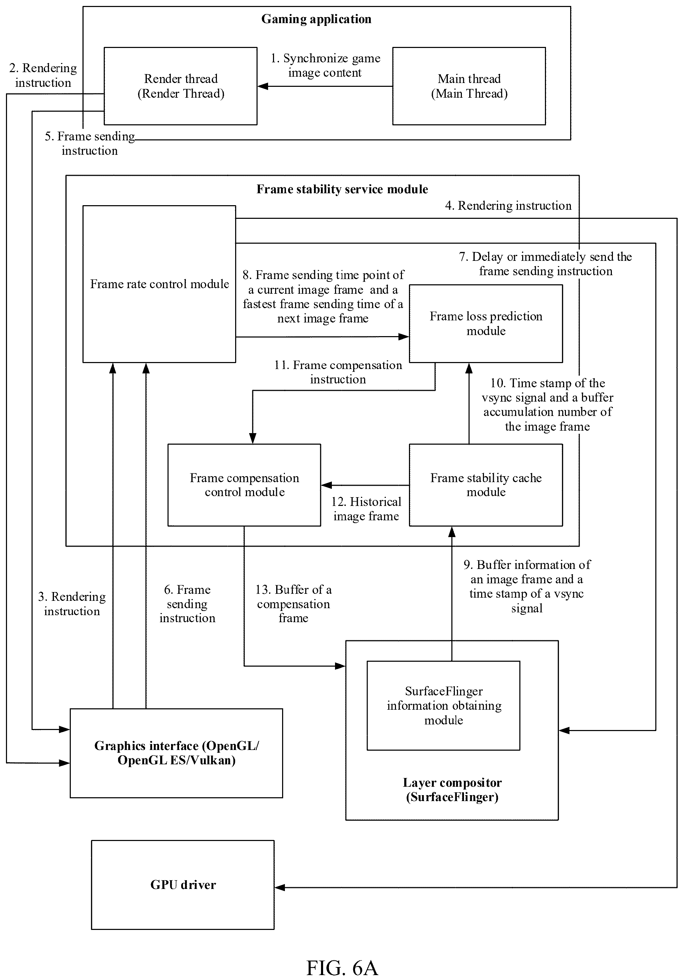

FIG. 6A illustrates a schematic diagram of a process for interacting via a software system architecture of the electronic device according to an embodiment of this application.

As shown in FIG. 6A, a gaming application is used as an example to describe the process for interacting via a software system architecture. The gaming application may include a main thread and a render thread. The frame stability service module may include a frame rate control module, a frame loss prediction module, a frame compensation control module, and a frame stability cache module. The layer compositor (SurfaceFlinger) may include a SurfaceFlinger information obtaining module.

The process of interaction between modules may be as follows:

1. The main thread of the gaming application may synchronize game image content to the render thread.
2. After obtaining the game image content, the render thread may send a rendering instruction to a graphics interface. The graphics interface may include any one of OpenGL, OpenGL ES, or Vulkan.
3. The graphics interface may forward the rendering instruction to the frame rate control module.
4. After obtaining the rendering instruction, the frame rate control module may send the rendering instruction to the GPU driver.

After obtaining the rendering instruction, the GPU driver sends the rendering instruction to the GPU, to configure the GPU to render the image frame based on the game image content, and stores a rendered image frame in the buffer specified in the rendering instruction.

After rendering the image frame, the GPU may store the image frame in the buffer specified by the rendering instruction.

5. After sending the rendering instruction, the render thread may send the frame sending instruction to the graphics interface.

6. The graphics interface may forward the frame sending instruction to the frame rate control module.

7. The frame rate control module may delay sending or immediately send the frame sending instruction to the SurfaceFlinger.

After obtaining the frame sending instruction, the frame rate control module may determine, based on a control frame rate, whether needing to delay sending the frame sending instruction, and determine a delay duration of delay sending the frame sending instruction.

After obtaining the frame sending instruction, the SurfaceFlinger may obtain an address of the buffer of the image frame from the frame sending instruction. When the image frame that has been rendered by the GPU is stored in the buffer, the SurfaceFlinger may know in time, via a fence (fence) mechanism, that the image frame has been stored in the buffer. Therefore, when a next vsync signal arrives, the SurfaceFlinger may take the image frame from the buffer of the image frame for performing layer composition, to compose an interface including the image frame, and may send the interface including the image frame to the display for displaying.

After obtaining a frame sending instruction of a current image frame, the frame rate control module may determine a rendering time of the current image frame based on a difference between a time point of obtaining a frame sending instruction of a previous image frame and a time point of obtaining the frame sending instruction of the current image frame. The frame rate control module may further determine, based on the rendering time of the current image frame, whether to delay forwarding the frame sending instruction of the current image frame to the SurfaceFlinger.

The frame rate control module may further record a frame sending time point of the current image frame, and determine a fastest frame sending time of a next image frame.

8. The frame rate control module may send the frame sending time point of the current image frame and the fastest frame sending time of the next image frame to the frame loss prediction module.

9. After obtaining the buffer of the image frame, the SurfaceFlinger may send information about the buffer of the image frame and a time stamp of the vsync signal to the frame stability cache module for storage.

The information about the buffer of the image frame may include the address of the buffer of the image frame, a buffer accumulation number of the image frame, or the like.

10. The frame stability cache module may send the time stamp of the vsync signal and the buffer accumulation number of the image frame to the frame loss prediction module.

The frame loss prediction module may determine a vsync signal cycle. The frame loss prediction module may predict whether there is a frame loss in the next image frame based on a time stamp of a latest vsync signal, the buffer accumulation number of the image frame, a fastest frame sending time of the next image frame, and a vsync cycle.

11. The frame loss prediction module may send a frame compensation instruction to a frame compensation control module when determining that there is a frame loss in the next image frame.

12. The frame compensation control module may obtain a historical image frame from the frame stability cache module.

After obtaining the historical image frame, the frame compensation control module may determine a frame compensation time point, when the frame compensation time point arrives, generate a predictive image frame based on the historical image frame, and store the predictive image frame in a buffer of the predictive image frame.

13. The frame compensation control module may send the buffer of the predictive image frame to the SurfaceFlinger.

After obtaining the buffer of the predictive image frame, when the next vsync signal arrives, the SurfaceFlinger may take the predictive image frame from the buffer of the predictive image frame for performing layer composition, to compose an interface including the predictive image frame, and may send the interface including the predictive image frame into the display for displaying.

A vertical synchronization signal thread (vsync thread) may periodically send a vsync signal to the Surface-Flinger.

In this embodiment of this application, the frame stability service module may control a frame rate at which any application renders an image frame, and perform frame compensation at an appropriate frame compensation time point.

In a possible implementation, when the frame stability service module recognizes that the gaming application invokes the GPU to render an image frame, a frame rate of the image frame set by the application is greater than or equal to a preset frame rate, a temperature of the electronic device is higher than a specified temperature threshold, a power level of the electronic device is lower than a specified power level, and/or an occupancy rate of a CPU of the electronic device is greater than a specified occupancy, the frame stability service module may further control a frame rate at which the image frame is rendered, and perform frame compensation at an appropriate frame compensation time point. The preset frame rate may be a maximum image refresh rate (that is, a full frame rate) supported by the application. The full frame rate may be equal to a refresh rate of the display of the electronic device.

In the process of interacting via the software system architecture shown in FIG. 6A, the frame stability service module can control the rendering frame rate of the application without perception of the application. This reduces power consumption of the electronic device.

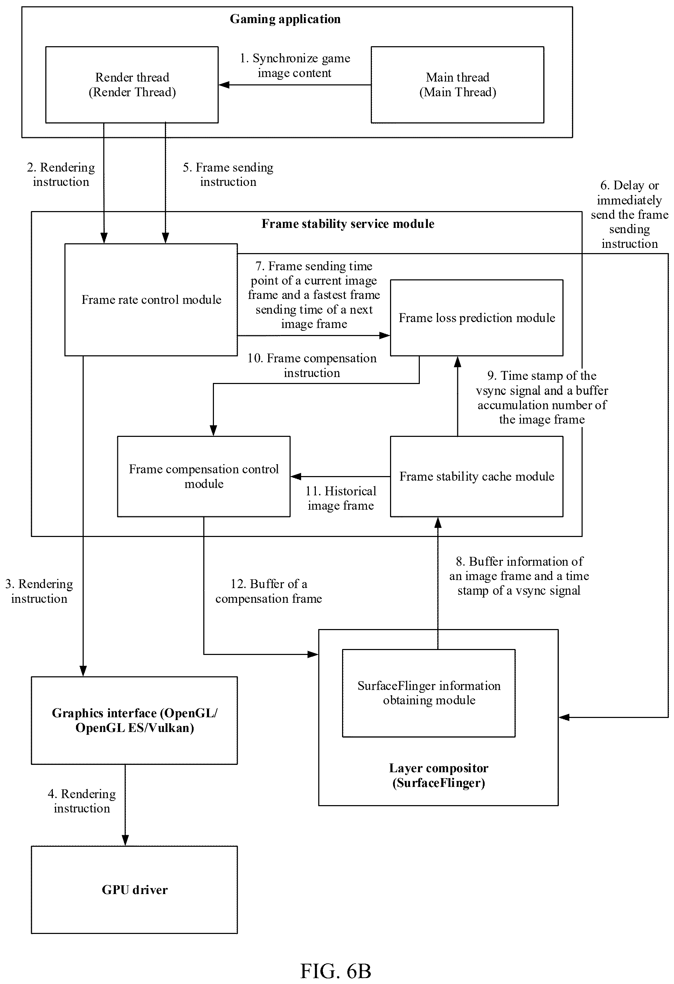

FIG. 6B illustrates a schematic diagram of another process for interacting via a software system architecture of the electronic device according to an embodiment of this application.

As shown in FIG. 6B, a gaming application is used as an example to describe the process for interacting via a software system architecture. The gaming application may include a main thread and a render thread. The frame stability service module may include a frame rate control module, a frame loss prediction module, a frame compensation control module, and a frame stability cache module. The layer compositor (SurfaceFlinger) may include a SurfaceFlinger information obtaining module.

The process of interaction between modules may be as follows:

1. The main thread of the gaming application may synchronize game image content to the render thread.

2. After obtaining the game image content, the render thread may send a rendering instruction to a frame rate control module.

3. After obtaining the rendering instruction sent by the render thread, the frame rate control module may forward the rendering instruction to the graphics interface.

The graphics interface may include any one of OpenGL, OpenGL ES, or Vulkan.

4. The graphics interface may forward the rendering instruction to the GPU driver.

After obtaining the rendering instruction, the GPU driver sends the rendering instruction to the GPU, to configure the GPU to render the image frame based on the game image content, and stores a rendered image frame in the buffer specified in the rendering instruction.

5. After sending the rendering instruction, the render thread may send the frame sending instruction to the frame rate control module.

6. The frame rate control module may delay sending or immediately send the frame sending instruction to the SurfaceFlinger.

After obtaining the frame sending instruction, the SurfaceFlinger may obtain an address of the buffer of the image frame from the frame sending instruction. When the image frame that has been rendered by the GPU is stored in the buffer, the SurfaceFlinger may know in time, via a fence (fence) mechanism, that the image frame has been stored in the buffer. Therefore, when a next vsync signal arrives, the SurfaceFlinger may take the image frame from the buffer of the image frame for performing layer composition, to compose an interface including the image frame, and may send the interface including the image frame to the display for displaying.

After obtaining a frame sending instruction of a current image frame, the frame rate control module may determine a rendering time of the current image frame based on a difference between a time point of obtaining a frame sending instruction of a previous image frame and a time point of obtaining the frame sending instruction of the current image frame. The frame rate control module may further determine, based on the rendering time of the current image frame, whether to delay forwarding the frame sending instruction of the current image frame to the SurfaceFlinger.

The frame rate control module may further record a frame sending time point of the current image frame, and determine a fastest frame sending time of a next image frame.

7. The frame rate control module may send the frame sending time point of the current image frame and the fastest frame sending time of the next image frame to the frame loss prediction module.

8. After obtaining the buffer of the image frame, the SurfaceFlinger may send information about the buffer of the image frame and a time stamp of the vsync signal to the frame stability cache module for storage.

The information about the buffer of the image frame may include the address of the buffer of the image frame, the buffer accumulation number of the image frame, or the like.

9. The frame stability cache module may send the time stamp of the vsync signal and the buffer accumulation number of the image frame to the frame loss prediction module.

The frame loss prediction module may determine a vsync signal cycle. The frame loss prediction module may predict whether there is a frame loss in the next image frame based on a time stamp of a latest vsync signal, the buffer accumulation number of the image frame, a fastest frame sending time of the next image frame, and a vsync cycle.

10. The frame loss prediction module may send a frame compensation instruction to a frame compensation control module when determining that there is a frame loss in the next image frame.

11. The frame compensation control module may obtain a historical image frame from the frame stability cache module.

After obtaining the historical image frame, the frame compensation control module may determine a frame compensation time point, when the frame compensation time point arrives, generate a predictive image frame based on the historical image frame, and store the predictive image frame in a buffer of the predictive image frame.

12. The frame compensation control module may send the buffer of the predictive image frame to the SurfaceFlinger.

After obtaining the buffer of the predictive image frame, when the next vsync signal arrives, the SurfaceFlinger may take the predictive image frame from the buffer of the predictive image frame for performing layer composition, to compose an interface including the predictive image frame, and may send the interface including the predictive image frame into the display for displaying.

A vertical synchronization signal thread (vsync thread) may periodically send a vsync signal to the Surface-Flinger.

In this embodiment of this application, the frame stability service module may control a frame rate at which any application renders an image frame, and perform frame compensation at an appropriate frame compensation time point.

In a possible implementation, when the frame stability service module recognizes that the gaming application invokes the GPU to render an image frame, a frame rate of the image frame set by the application is greater than or equal to a preset frame rate, a temperature of the electronic device is higher than a specified temperature threshold, a power level of the electronic device is lower than a specified power level, and/or an occupancy rate of a CPU of the electronic device is greater than a specified occupancy, the frame stability service module may further control a frame rate at which the image frame is rendered, and perform frame compensation at an appropriate frame compensation time point. The preset frame rate may be a maximum image refresh rate (that is, a full frame rate) supported by the application. The full frame rate may be equal to a refresh rate of the display of the electronic device.

The following describes a frame control process of the frame rate control module provided in an embodiment of this application.

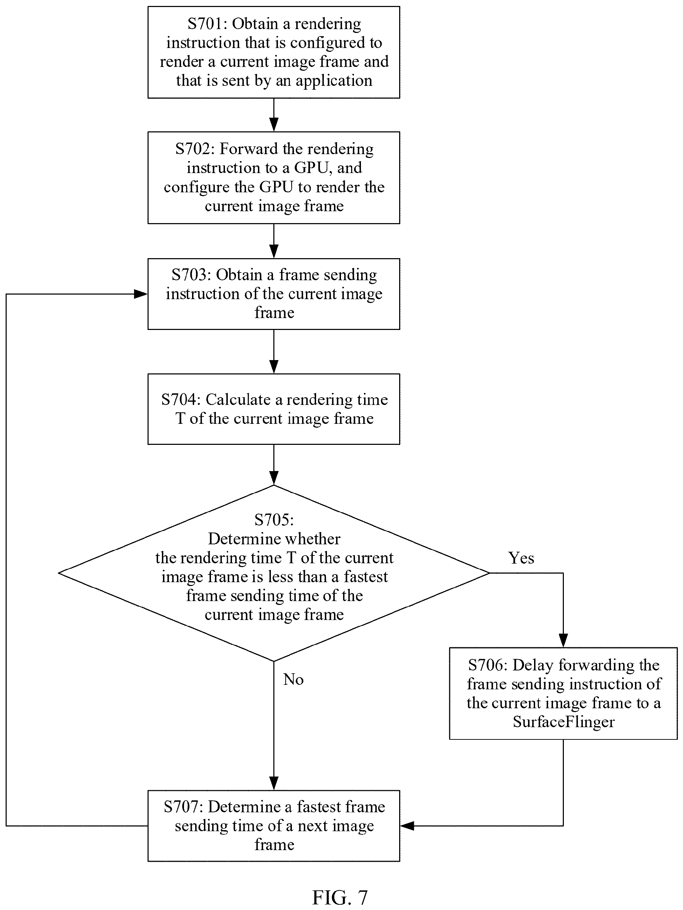

FIG. 7 illustrates a schematic diagram of a frame control process according to an embodiment of this application.

As shown in FIG. 7, the control process may include the following steps.

S701: A frame rate control module may obtain a rendering instruction that renders a current image frame and that is sent by an application.

S702: The frame rate control module may forward the rendering instruction to a GPU, to configure the GPU to render the current image frame.

The frame rate control module may obtain, from a graphics interface in the manner shown in FIG. 6A, the rendering instruction for rendering the current image frame, and the frame rate control module may forward the rendering instruction of the current image frame to the GPU via a GPU driver.

The frame rate control module may also directly obtain, from the application in the manner shown in FIG. 6B, the rendering instruction for rendering the current image frame, and the frame rate control module may send the rendering instruction of the current image frame to the GPU via the graphics interface and the GPU driver in sequence.

The graphics interface may include any one of OpenGL, OpenGL ES, or Vulkan.

S703: The frame rate control module may obtain a frame sending instruction of the current image frame.

The frame rate control module may obtain, from the graphics interface in the manner shown in FIG. 6A, the frame sending instruction of the current image frame, and then the frame rate control module delays sending or immediately sends the frame sending instruction of the current image frame to the SurfaceFlinger.

The frame rate control module may also directly obtain, from the application in the manner shown in FIG. 6B, the frame sending instruction of the current image frame, and then the frame rate control module delays sending or immediately sends the frame sending instruction of the current image frame to the SurfaceFlinger.

S704: The frame rate control module calculates a rendering time T of the current image frame.

The frame rate control module may determine the rendering time T of the current image frame based on a time stamp for obtaining a frame sending instruction of a previous image frame and a time stamp for obtaining the frame sending instruction of the current image frame. The rendering time T of the current image frame may be a difference between the time stamp at which the frame rate control module obtains the frame sending instruction of the current image frame and the time stamp at which the frame rate control module obtains the frame sending instruction of the previous image frame. For example, the time stamp for obtaining the frame sending instruction of the previous image frame may be Ma, and the time stamp for obtaining the frame sending instruction of the current image frame may be Mb. Therefore, the rendering time T of the current image frame is $T = Mb - Ma$.

S705: The frame rate control module determines whether the rendering time T of the current image frame is less than a fastest frame sending time of the current image frame.

The fastest frame sending time of the current image frame may be used to indicate a minimum time interval between the frame sending instruction of the current image frame and the frame sending instruction of the previous image frame when a frame rate at which the GPU renders the image frame is reduced to a control frame rate.

If the previous image frame is a first image frame of the application, the frame rate control module immediately forwards the frame sending instruction of the previous image frame. The frame rate control module may determine a fastest frame sending time TN of a next image frame as a frame control cycle T1 based on a control frame rate F1. The frame control cycle T1 is a reciprocal of the control frame rate F1, that is, $T1 = 1/F1$. F1 is less than a full frame rate F0. The full frame rate F0 may be equal to a refresh rate of a display. For example, if the full frame rate F0 is 60 frames/second, the control frame rate F1 may be 58 frames/second.

If the previous image frame is a non-first image frame of the application, the frame rate control module may determine a fastest frame sending time TN' of the current image frame based on the frame control cycle T1, a rendering time T0 of the previous image frame, and a fastest frame sending time TN0 of the previous image frame.

When T0 is less than T1 and TN0 is less than T1, TN' may be MIN (T1, TN0 + (T1 - T0)), that is, TN' takes a smallest value of the T1 and (TN0 + (T1 - T0)).

When T0 is less than T1 and TN' is not less than T1, a value of TN may remain unchanged, continuing to be TN0.

When T0 is not less than T1, TN' may be MAX (0, TN0 - (T0 - TN0)), that is, a value of TN' is a maximum value of 0 and (TN0 - (T0 - TN0)).

If the rendering time T of the current image frame is less than the fastest frame sending time of the current image frame, it indicates that a frame rate at which the gaming application indicates the GPU to render the image frame is greater than the frame rate control. If a load of the GPU is high, the frame rate at which the GPU renders the image frame needs to be reduced. Therefore, if the rendering time T of the current image frame is less than the fastest frame sending time of the current image frame, step S706 and step S707 may be performed.

If the rendering time T of the current image frame is not less than the fastest frame sending time of the current image frame, it indicates that a frame rate at which the gaming application indicates the GPU to render the image frame is not greater than the frame rate control. If a load of the GPU is not high, and the frame rate at which the GPU renders the image frame does not need to be reduced. Step S707 is directly performed.

S706: The frame rate control module delays forwarding the frame sending instruction of the current image frame to the SurfaceFlinger.

When determining that the frame rate at which the GPU renders the image frame needs to be reduced, the frame rate control module may delay forwarding the frame sending instruction of the current image frame to the SurfaceFlinger. A delay duration may be a difference between the fastest frame sending time of the current image frame and the rendering time T of the current image frame.

Specifically, after obtaining the frame sending instruction of the current image frame, the frame rate control module may sleep for the delay duration, and then may wake up automatically. Because the application may only render the next image frame after the frame sending instruction is sent to the SurfaceFlinger, and the frame rate control module delays sending the frame sending instruction of the current image frame, an interval when the application renders the image frame is increased. That is, the interval between two adjacent image frames rendered by the GPU is reduced. In this way, the number of times GPU renders the image frame within a specific time period is also reduced. This achieves the purposes of reducing the load of the GPU and reducing power consumption of the electronic device.

S707: Determine a fastest frame sending time of the next image frame.

If the current image frame is the first image frame of the application, the frame sending instruction of the current image frame is immediately forwarded. The frame rate control module may determine a fastest frame sending time TN of a next image frame as a frame control cycle T1 based on the frame rate control F1. The frame control cycle T1 is a reciprocal of the frame rate control F1, that is, T1 = 1/F1. F1 is less than a full frame rate F0. The full frame rate F0 may be equal to a refresh rate of a display. For example, if the full frame rate F0 is 60 frames/second, the control frame rate F1 may be 58 frames/second.

If the current image frame is the non-first image frame of the application, the frame rate control module may determine the fastest frame sending time TN of the next image frame based on the frame control cycle T1, the rendering time T of the current image frame, and the fastest frame sending time TN' of the current image frame.

Specifically, a strategy for determining the fastest frame sending time TN of the next image frame may be shown in Table 1 below:

**Table 1**

| Is T less than T1 | Is TN' less than T1 | Value of TN |
|---|---|---|
| Yes | Yes | MIN (T1, TN' + (T1 - T)) |
| Yes | No | Unchanged, is TN' |
| No | \ | MAX (0, TN' - (T - TN')) |

It can be learned from Table 1 that, when T is less than T1 and TN' is less than T1, TN may be MIN (T1, TN' + (T1 - T)), that is, TN takes a smallest value of T1 and (TN' + (T1 - T)).

When T is less than T1 and TN' is not less than T1, a value of TN may remain unchanged, continuing to be TN'.

When T is not less than T1, TN may be MAX (0, TN' - (T - TN')), that is, a value of TN is a maximum value of 0 and (TN' - (T - TN')).

After the frame rate control module readjusted the fastest frame sending time TN of the next image frame, the frame rate control module may continue to wait for the rendering instruction of the next image frame, and re-perform step S701 to step S705.

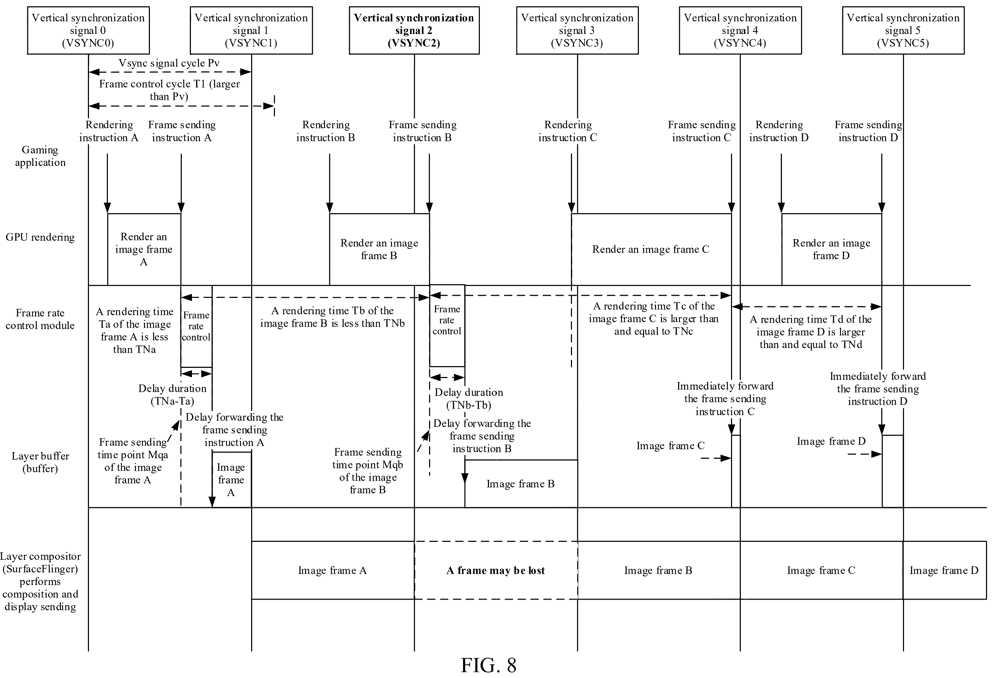

The following specifically describes the frame control process of the frame rate control module with reference to an example of a time-sequence diagram of frame rate control illustrated in FIG. 8.

As shown in FIG. 8, the SurfaceFlinger may sequentially periodically receive a vertical synchronization signal 0 (VSYNC0), a vertical synchronization signal 1 (VSYNC1), a vertical synchronization signal 2 (VSYNC2), a vertical synchronization signal 3 (VSYNC3), a vertical synchronization signal 4 (VSYNC4), and a vertical synchronization signal 5 (VSYNC5).

1. The gaming application may sequentially send a rendering instruction A and a frame sending instruction A of the image frame A between a time stamp of the VSYNC0 and a time stamp of the VSYNC1. After obtaining the rendering instruction A of the image frame A, the frame rate control module may send the rendering instruction A to the GPU. After obtaining the rendering instruction A, the GPU may render the image frame A, and may store the image frame A in a buffer of the image frame A after rendering the image frame A.

When detecting the frame sending instruction A, the frame rate control module may determine a rendering time Ta of the image frame A based on a difference between a time point of obtaining the frame sending instruction of the previous image frame and a time point of obtaining the frame sending instruction A. The frame rate control module may determine a fastest frame sending time TNb of an image frame B. The image frame B is a next image frame of the image frame A. When Ta is less than T1 and TNa is less than T1, TNb may be MIN (T1, TNa + (T1 - Ta)). That is, TNb takes a smallest value of T1 and (TNa + (T1 - Ta)). When Ta is less than T1 and TNa is not less than T1, TNb may be TNa. When Ta is not less than T1, TNb may be a maximum value of 0 and (TNa - (Ta - TNa)).

Because the rendering time Ta of the image frame A is less than the fastest frame sending time TNa of the image frame A, a frame control condition is satisfied, and the frame rate control module may delay (TNa - Ta) in sending the frame sending instruction A to the SurfaceFlinger after obtaining the frame sending instruction A of the image frame A. A frame sending time point of the image frame A may be Mqa. The fastest frame sending time TNa of the image frame A is determined when the frame sending instruction of the previous image frame of the image frame A is obtained. If the previous frame of the image frame A is a first frame, TNa is the frame control cycle T1.

After obtaining a buffer of the image frame A based on the frame sending instruction A, when waiting until the arrival of the VSYNC1, the SurfaceFlinger may take the image frame A from the buffer of the image frame A for performing layer composition, to send the image frame A to a display for displaying.

2. The gaming application may send the rendering instruction B of the image frame B to the frame rate control module between a time stamp of the VSYNC1 and a time stamp of the VSYNC2. When the VSYNC2 arrives, the gaming application does not send the frame sending instruction B of the image frame B.

When VSYNC2 arrives, because the SurfaceFlinger cannot obtain the frame sending instruction B of the image frame B. Therefore, when the VSYNC2 arrives, the SurfaceFlinger cannot obtain a buffer of the image frame B, resulting in a frame loss. The display shows the image frame A at two consecutive refresh cycles.

3. Between the time stamp of the VSYNC2 and a time stamp of VSYNC3, the gaming application sends a frame sending instruction B to the frame rate control module.

When detecting the frame sending instruction B, the frame rate control module may determine a rendering time Tb of the image frame B based on a difference between a time point of obtaining the frame sending instruction A and a time point of obtaining the frame sending instruction B. The frame rate control module may determine a fastest frame sending time TNc of an image frame C. The image frame C is a next image frame of the image frame B. When Tb is less than T1 and TNb is less than T1, TNc may be MIN (T1, TNb + (T1 - Tb)). That is, a value of TNc is a smallest value of T1 and (TNb + (T1 - Tb)). When Tb is less than T1 and TNb is not less than T1, TNc may be TNb. When Tb is not less than T1, TNc may be a maximum value of 0 and (TNb - (Tb - TNb)).

Because the rendering time Tb of the image frame B is less than TNb, a frame control condition is satisfied, and the frame rate control module may delay (TNb - Tb) in sending the frame sending instruction B to the SurfaceFlinger after obtaining the frame sending instruction B of the image frame B. A frame sending time point of the image frame B may be Mqb.

After obtaining a buffer of the image frame B based on the frame sending instruction B, when waiting until the arrival of the VSYNC3, the SurfaceFlinger may take the image frame B from the buffer of the image frame B for performing layer composition, to send the image frame B to a display for displaying.

After sending the frame sending instruction B, the gaming application may send a rendering instruction C of the image frame C to the frame rate control module. After obtaining the rendering instruction C of the image frame C, the frame rate control module may send the rendering instruction C to the GPU. After obtaining the rendering instruction C, the GPU may render the image frame C, and may store the image frame C in a buffer of the image frame C after rendering the image frame C.

4. Between the time stamp of the VSYNC3 and a time stamp of VSYNC4, the gaming application sends the frame sending instruction C to the frame rate control module.

When detecting the frame sending instruction C, the frame rate control module may determine a rendering time Tc of the image frame C based on a difference between a time point of obtaining the frame sending instruction C and a time point of obtaining the frame sending instruction C. The frame rate control module may determine a fastest frame sending time TNd of an image frame D. The image frame D is a next image frame of the image frame C. When Tc is less than T1 and TNc is less than T1, TNd may be MIN (T1, TNc + (T1 - Tc)). That is, a value of TNd is a minimum value of T1 and (TNc + (T1 - Tc)). When Tc is less than T1 and TNc is not less than T1, TNd may be TNc. When Tc is not less than T1, TNd may be a maximum value of 0 and (TNc - (Tc - TNc)).

Because the rendering time Tc of the image frame C is greater than or equal to TNc, the frame control condition is not satisfied, and the frame rate control module immediately sends the frame sending instruction C to the SurfaceFlinger after obtaining the frame sending instruction C of the image frame C.

After obtaining a buffer of the image frame C based on the frame sending instruction C, when waiting until the arrival of the VSYNC4, the SurfaceFlinger may take the image frame C from the buffer of the image frame C for performing layer composition, to send the image frame C to a display for displaying.

5. Between the time stamp of the VSYNC4 and a time stamp of VSYNC5, the gaming application may send the rendering instruction D of the image frame D to the frame rate control module. After obtaining the rendering instruction D of the image frame D, the frame rate control module may send the rendering instruction D to the GPU. After obtaining the rendering instruction D, the GPU may render the image frame D, and may store the image frame D in a buffer of the image frame D after rendering the image frame D.

Between the time stamp of the VSYNC4 and a time stamp of VSYNC5, the gaming application may send the frame sending instruction D to the frame rate control module. When obtaining the frame sending instruction D, the frame rate control module may determine a rendering time Td of the image frame D based on a difference between a time point of obtaining the frame sending instruction C and a time point of obtaining the frame sending instruction D. The frame rate control module may determine a fastest frame sending time TNe of an image frame E (not shown in FIG. 8). The image frame E is a next image frame of the image frame D. When Td is less than T1 and TNd is less than T1, TNe may be MIN (T1, TNd + (T1 - Td)). That is, a value of TNe is a smallest value of T1 and (TNd + (T1 - Td)). When Td is less than T1 and TNd is not less than T1, TNe may be TNd. When Td is not less than T1, TNe may be a maximum value of 0 and (TNd - (Td - TNd)).

Because the rendering time Td of the image frame D is greater than or equal to TNd, the frame control condition is not satisfied, and the frame rate control module immediately sends the frame sending instruction D to the SurfaceFlinger after obtaining the frame sending instruction D of the image frame D.

After obtaining a buffer of the image frame D based on the frame sending instruction D, when waiting until the arrival of the VSYNC5, the SurfaceFlinger may take the image frame D from the buffer of the image frame D for performing layer composition, to send the image frame D to a display for displaying.

The example shown in FIG. 8 is only used to explain this application and should not be construed as a limitation.

The following describes a frame loss prediction process of the frame loss prediction module provided in an embodiment of this application.

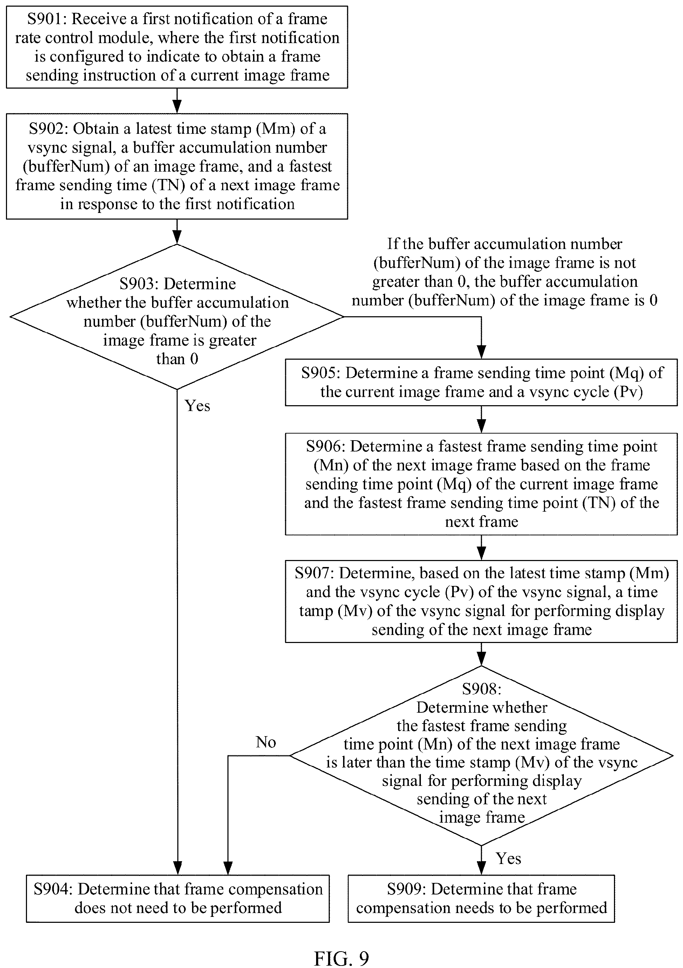

FIG. 9 illustrates a schematic diagram of the frame loss prediction process according to an embodiment of this application.

As shown in FIG. 9, the frame loss prediction process may include the following steps.

S901: A frame loss prediction module may receive a first notification of a frame rate control module, where the first notification is used to indicate to obtain a frame sending instruction of a current image frame.

The frame rate control module may send the first notification to a frame loss prediction module when obtaining the frame sending instruction of the current image frame.

S902: The frame loss prediction module may obtain a latest vsync signal time stamp (Mm), the buffer accumulation number (bufferNum) of the image frame, and a fastest frame sending time (TN) of a next image frame.

The frame loss prediction module may obtain the latest vsync signal time stamp (Mm), the buffer accumulation number (bufferNum) of the image frame from a frame stability cache module. The frame loss prediction module may obtain the fastest frame sending time (TN) of the next image frame from the frame rate control module.

For a process of determining the fastest frame sending time (TN) of the next image frame, refer to the text portion of the embodiments shown in FIG. 7 and FIG. 8, and details are not described herein again.

S903: The frame loss prediction module may determine whether the buffer accumulation number of the image frame is greater than 0.

If the buffer accumulation number of the image frame is greater than 0, it indicates that a SurfaceFlinger does not lose a frame when a next vsync signal arrives. Therefore, the frame loss prediction module may perform step S904.

If the buffer accumulation number of the image frame is 0, it indicates that a SurfaceFlinger may lose a frame when a next vsync signal arrives. Therefore, the frame loss prediction module may perform step S905 to step S908.

S904: The frame loss prediction module may determine that frame compensation does not need to be performed.

S905: The frame loss prediction module determines a frame sending time point (Mq) and a vsync cycle (Pv) of the current image frame.

The frame rate control module may record the frame sending time point (Mq) of the current image frame when obtaining the frame sending instruction of the current image frame. The frame loss prediction module may obtain the frame sending time point (Mq) of the current image frame from the frame rate control module.

The frame loss prediction module may determine the vsync cycle (Pv) based on a full frame rate F0, that is, Pv = 1/F0.

In a possible implementation, the frame loss prediction module may further determine the vsync cycle (Pv) based on a difference between time stamps of two adjacent vsync signals.

S906: The frame loss prediction module may determine the fastest frame sending time point (Mn) of the next image frame based on the frame sending time point (Mq) of the current image frame and the fastest frame sending time (TN) of the next image frame,

where Mn = Mq + TN.

S907: The frame loss prediction module may determine, based on the latest vsync signal time stamp (Mm) and the vsync cycle (Pv), a vsync signal time stamp (Mv) for performing display sending of the next image frame,

where Mv = Mm + 2 * Pv.

S908: The frame loss prediction module may determine whether the fastest frame sending time point (Mn) of the next image frame is later than the vsync signal time stamp (Mv) for performing display sending of the next image frame.

If the fastest frame sending time point (Mn) of the next image frame is later than the vsync signal time stamp (Mv) for performing display sending of the next image frame, it indicates that the SurfaceFlinger loses a frame when the next vsync signal arrives. Therefore, the frame loss prediction module may perform step S909.

If the fastest frame sending time point (Mn) of the next image frame is not later than the vsync signal time stamp (Mv) for performing display sending of the next image frame, it indicates that SurfaceFlinger does not lose a frame when the next vsync signal arrives. Therefore, the frame loss prediction module may perform step S904.

S909: The frame loss prediction module determines that frame compensation needs to be performed.

When determining that frame compensation needs to be performed, the frame loss prediction module may send a frame compensation instruction to the frame compensation control module.

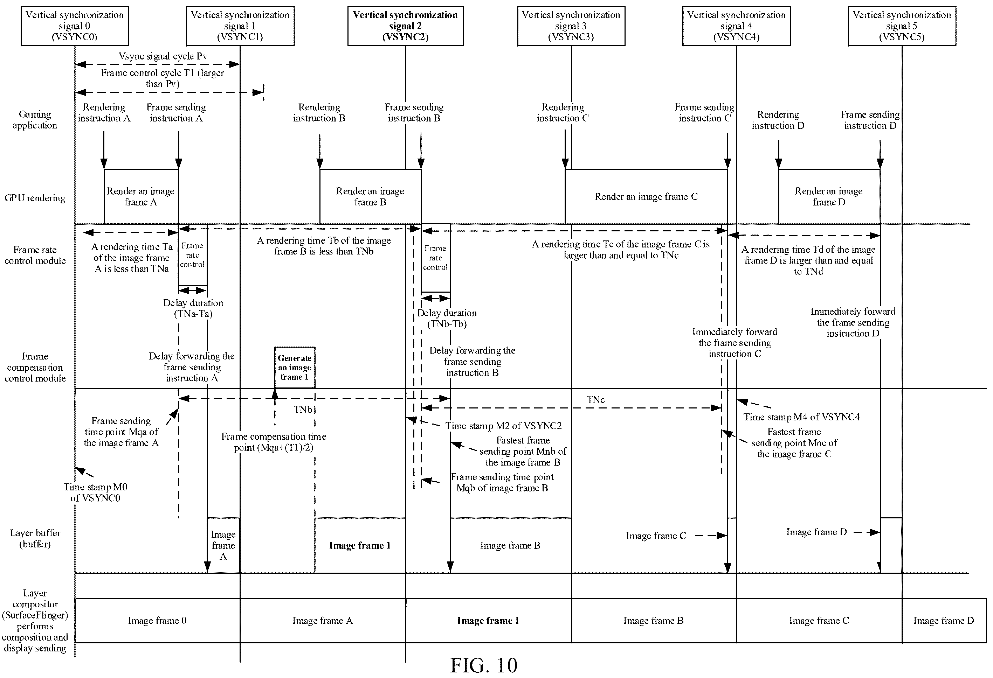

The following specifically describes the frame loss prediction process of the frame loss prediction module with reference to an example of a time-sequence diagram of frame rate control illustrated in FIG. 10.

As shown in FIG. 10, the SurfaceFlinger may sequentially periodically receive a vertical synchronization signal 0 (VSYNC0), a vertical synchronization signal 1 (VSYNC1), a vertical synchronization signal 2 (VSYNC2), a vertical synchronization signal 3 (VSYNC3), a vertical synchronization signal 4 (VSYNC4), and a vertical synchronization signal 5 (VSYNC5).

1. The gaming application may sequentially send a rendering instruction A and a frame sending instruction A of the image frame A between a time stamp of the VSYNC0 and a time stamp of the VSYNC 1. After obtaining the rendering instruction A of the image frame A, the frame rate control module may send the rendering instruction A to the GPU. After obtaining the rendering instruction A, the GPU may render the image frame A, and may store the image frame A in a buffer of the image frame A after rendering the image frame A.

When detecting the frame sending instruction A, the frame rate control module may determine a rendering time Ta of the image frame A based on a difference between a time point of obtaining the frame sending instruction of the previous image frame and a time point of obtaining the frame sending instruction A. The frame rate control module may determine a fastest frame sending time TNb of an image frame B. The image frame B is a next image frame of the image frame A. When Ta is less than T1 and TNa is less than T1, TNb may be MIN (T1, TNa + (T1 - Ta)). That is, TNb takes a smallest value of T1 and (TNa + (T1 - Ta)). When Ta is less than T1 and TNa is not less than T1, TNb may be TNa. When Ta is not less than T1, TNb may be a maximum value of 0 and (TNa - (Ta - TNa)).

Because the rendering time Ta of the image frame A is less than the fastest frame sending time TNa of the image frame A, a frame control condition is satisfied, and the frame rate control module may delay (TNa - Ta) in sending the frame sending instruction A to the SurfaceFlinger after obtaining the frame sending instruction A of the image frame A. A frame sending time point of the image frame A may be Mqa. The fastest frame sending time TNa of the image frame A is determined when the frame sending instruction of the previous image frame of the image frame A is obtained. If the previous frame of the image frame A is a first frame, TNa is the frame control cycle T1.

After obtaining a buffer of the image frame A based on the frame sending instruction A, when waiting until the arrival of the VSYNC1, the SurfaceFlinger may take the image frame A from the buffer of the image frame A for performing layer composition, to send the image frame A to a display for displaying.

When detecting the frame sending instruction A, the frame rate control module may notify the frame loss prediction module to enter a frame loss prediction process.

The frame loss prediction module may obtain the frame sending time point Mqa and the latest vsync signal time stamp Mm (in this case, is a time stamp M0 of a VYSNC0) of the image frame A from the frame rate control module. The frame loss prediction module may determine, based on the time stamp M0 of the VYSNC0 and the vsync signal cycle Pv, that a vsync signal time stamp Mv for performing display sending of the next image frame of the image frame is a time stamp M2 of a VSYNC2, where M2 = M0 + 2 * Pv.

The frame loss prediction module may determine a fastest frame sending time point Mnb of an image frame B based on the frame sending time point Mqa of the image frame A and a fastest rendering time TNb of the image frame B, where Mnb = Mqa + TNb.

Because the fastest frame sending time point Mnb of the image frame B is later than the time stamp M2 of the VSYNC2, the frame loss prediction module determines that frame compensation needs to be performed before the vsync time stamp M2. The frame loss prediction module may send a frame compensation instruction to the frame compensation control module. After obtaining the frame compensation instruction, the frame compensation control module may complete frame compensation before the time stamp M2 of the VSYNC2, and store a generated compensation frame 1 in a buffer of a compensation frame 1, and provide the generated compensation frame 1 to the SurfaceFlingr. After obtaining the buffer of the compensation frame 1 and when receiving the VSYNC2, the SurfaceFlinger may take the compensation frame 1 from the buffer of the compensation frame 1 for performing layer composition, to send the compensation frame 1 to the display for displaying.

The frame loss prediction module may further determine a frame compensation time point of the compensation frame 1, carry the frame compensation time point of the compensation frame 1 in the frame compensation instruction, and send the frame compensation time point to the frame compensation control module. The frame compensation control module may perform frame compensation when the frame compensation time point arrives. For example, the frame compensation time point of the compensation frame 1 may be (Mqa + (T1)/2).

2. The gaming application may send the rendering instruction B of the image frame B to the frame rate control module between a time stamp of the VSYNC1 and a time stamp of the VSYNC2. When the VSYNC2 arrives, the gaming application does not send the frame sending instruction B of the image frame B.

When the VSYNC2 arrives, because the SurfaceFlinger does not obtain the frame sending instruction B of the image frame B, the frame compensation control module has stored the generated image frame 1 in the buffer of the image frame 1 before the time stamp of VSYNC2 arrives, and provides the generated image frame 1 to the SurfaceFlinger. When VSYNC2 arrives, the SurfaceFlinger may take the image frame 1 from the buffer of the image frame 1 for performing layer composition, to send the image frame 1 to the display for displaying.

3. Between the time stamp of the VSYNC2 and a time stamp of VSYNC3, the gaming application sends a frame sending instruction B to the frame rate control module.

When detecting the frame sending instruction B, the frame rate control module may determine a rendering time Tb of the image frame B based on a difference between a time point of obtaining the frame sending instruction A and a time point of obtaining the frame sending instruction B. The frame rate control module may determine a fastest frame sending time TNc of an image frame C. When Tb is less than T1 and TNb is less than T1, TNc may be MIN (T1, TNb + (T1 - Tb)). That is, a value of TNc is a smallest value of T1 and (TNb + (T1 - Tb)). When Tb is less than T1 and TNb is not less than T1, TNc may be TNb. When Tb is not less than T1, TNc may be a maximum value of 0 and (TNb - (Tb - TNb)).

Because the rendering time Tb of the image frame B is less than TNb, a frame control condition is satisfied, and the frame rate control module may delay (TNb - Tb) in sending the frame sending instruction B to the SurfaceFlinger after obtaining the frame sending instruction B of the image frame B. A frame sending time point of the image frame B may be Mqb.

After obtaining a buffer of the image frame B based on the frame sending instruction B, when waiting until the arrival of the VSYNC3, the SurfaceFlinger may take the image frame B from the buffer of the image frame B for performing layer composition, to send the image frame B to a display for displaying.

After sending the frame sending instruction B, the gaming application may send a rendering instruction C of the image frame C to the frame rate control module. After obtaining the rendering instruction C of the image frame C, the frame rate control module may send the rendering instruction C to the GPU. After obtaining the rendering instruction C, the GPU may render the image frame C, and may store the image frame C in a buffer of the image frame C after rendering the image frame C.

When detecting the frame sending instruction B, the frame rate control module may notify the frame loss prediction module to enter the frame loss prediction process.

The frame loss prediction module may obtain the frame sending time point Mqb and the latest vsync signal time stamp Mm (in this case, is a time stamp M3 of a VYSNC2) of the image frame B from the frame rate control module. The frame loss prediction module may determine, based on the time stamp M2 of the VYSNC2 and the vsync signal cycle Pv, that a vsync signal time stamp Mv for performing display sending of the next image frame of the image frame is a time stamp M4 of a VSYNC4, where M4 = M2 + 2 * Pv.

The frame loss prediction module may determine a fastest frame sending time point Mnc of an image frame C based on the frame sending time point Mqb of the image frame B and a fastest rendering time TNc of the image frame C, where Mnc = Mqb + TNc.

Because the fastest frame sending time point Mnc of the image frame C is earlier than the time stamp M4 of the VSYNC4, the frame loss prediction module determines that frame compensation does not need to be performed before the time stamp M4 of the VSYNC4.

4. Between the time stamp of the VSYNC3 and a time stamp of VSYNC4, the gaming application sends the frame sending instruction C to the frame rate control module.

When detecting the frame sending instruction C, the frame rate control module may determine a rendering time Tc of the image frame C based on a difference between a time point of obtaining the frame sending instruction C and a time point of obtaining the frame sending instruction C. The frame rate control module may determine a fastest frame sending time TNd of an image frame D. When Tc is less than T1 and TNc is less than T1, TNd may be MIN (T1, TNc + (T1 - Tc)). That is, a value of TNd is a minimum value of T1 and (TNc + (T1 - Tc)). When Tc is less than T1 and TNc is not less than T1, TNd may be TNc. When Tc is not less than T1, TNd may be a maximum value of 0 and (TNc - (Tc - TNc)).

Because the rendering time Tc of the image frame C is greater than or equal to TNc, the frame control condition is not satisfied, and the frame rate control module immediately sends the frame sending instruction C to the SurfaceFlinger after obtaining the frame sending instruction C of the image frame C.

After obtaining a buffer of the image frame C based on the frame sending instruction C, when waiting until the arrival of the VSYNC4, the SurfaceFlinger may take the image frame C from the buffer of the image frame C for performing layer composition, to send the image frame C to a display for displaying.

When detecting the frame sending instruction C, the frame rate control module may notify the frame loss prediction module to enter the frame loss prediction process.

The frame loss prediction module may obtain the frame sending time point Mqc and the latest vsync signal time stamp Mm (in this case, is a time stamp M3 of a VYSNC3) of the image frame C from the frame rate control module. The frame loss prediction module may determine, based on the time stamp M3 of the VYSNC3 and the vsync signal cycle Pv, that a vsync signal time stamp Mv for performing display sending of the next image frame of the image frame is a time stamp M5 of a VSYNC5, where M5 = M3 + 2 * Pv.

The frame loss prediction module may determine a fastest frame sending time point Mnd of an image frame D based on the frame sending time point Mqc of the image frame C and a fastest rendering time TNd of the image frame D, where Mnd = Mqc + TNd.

Because the fastest frame sending time point Mnd of the image frame D is later than the time stamp M5 of the VSYNC4, the frame loss prediction module determines that frame compensation does not need to be performed before the vsync time stamp M5.

5. Between the time stamp of the VSYNC4 and a time stamp of VSYNC5, the gaming application may send the rendering instruction D of the image frame D to the frame rate control module. After obtaining the rendering instruction D of the image frame D, the frame rate control module may send the rendering instruction D to the GPU. After obtaining the rendering instruction D, the GPU may render the image frame D, and may store the image frame D in a buffer of the image frame D after rendering the image frame D.

Between the time stamp of the VSYNC4 and a time stamp of VSYNC5, the gaming application may send the frame sending instruction D to the frame rate control module. When obtaining the frame sending instruction D, the frame rate control module may determine a rendering time Td of the image frame D based on a difference between a time point of obtaining the frame sending instruction C and a time point of obtaining the frame sending instruction D. The frame rate control module may determine a fastest frame sending time TNe of an image frame E (not shown in FIG. 8). The image frame E is a next image frame of the image frame D. When Td is less than T1 and TNd is less than T1, TNe may be MIN (T1, TNd + (T1 - Td)). That is, a value of TNe is a smallest value of T1 and (TNd + (T1 - Td)). When Td is less than T1 and TNd is not less than T1, TNe may be TNd. When Td is not less than T1, TNe may be a maximum value of 0 and (TNd - (Td - TNd)).

Because the rendering time Td of the image frame D is greater than or equal to TNd, the frame control condition is not satisfied, and the frame rate control module immediately sends the frame sending instruction D to the SurfaceFlinger after obtaining the frame sending instruction D of the image frame D.

After obtaining a buffer of the image frame D based on the frame sending instruction D, when waiting until the arrival of the VSYNC5, the SurfaceFlinger may take the image frame D from the buffer of the image frame D for performing layer composition, to send the image frame D to a display for displaying.

The example shown in FIG. 10 is only used to explain this application and should not be construed as a limitation.

The following describes a frame compensation process of the frame compensation control module provided in an embodiment of this application.

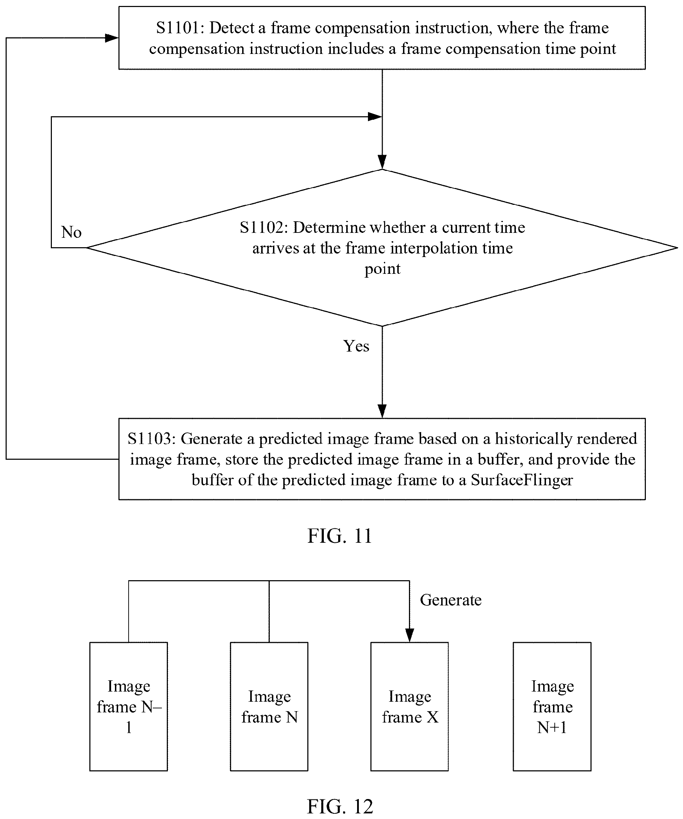

FIG. 11 illustrates a schematic diagram of a frame compensation process according to an embodiment of this application.

As shown in FIG. 11, the frame compensation process may include the following steps.

S1101: A frame compensation control module may detect a frame compensation instruction, where the frame compensation instruction may include a frame compensation time point.

S1102: The frame compensation control module may determine whether a current time arrives at the frame compensation time point.

If the current time arrives at the frame compensation time point, the frame compensation control module may perform step S1103.

If the current time does not arrive at the frame compensation time point, the frame compensation control module may wait until the frame compensation time point arrives, and perform step S1103.

Due to multi-task concurrency in a short time, a high load on a system is high, and a part of tasks cannot be run in a timely manner. As a result, system resources cannot be reasonably utilized. Therefore, in this embodiment of this application, an intermediate time between rendering times of two original image frames may be used as an optimal frame compensation time point, to reasonably utilize the system resources. The optimal frame compensation time point may be obtained at the frame sending time point Mq of the current image frame and the frame control cycle T1. The optimal frame compensation time point may be (Mq + (T1/2)).

For example, as shown in FIG. 10, the frame sending time point of the image frame A is Mqa, and the frame loss prediction module determines that the image frame 1 needs to be generated after the image frame A. Therefore, the optimal frame compensation time point of the image frame 1 may be (Mqa + (T1/2)).

S1103: The frame compensation control module generates a predictive image frame based on a historically rendered image frame, stores the predictive image frame in a buffer, and provides the buffer of the predictive image frame to the SurfaceFlinger.

In an example, because similarity of image content of adjacent image frames is relatively high, the frame compensation control module may recognize movement trajectories of image content in an image frame N-1 and an image frame N based on an image frame N-1 and an image frame N that have been rendered, and adjust, based on the movement trajectories of the image content, a display position of the image content in the image frame N, to obtain a compensation frame X.

After obtaining the buffer of the image frame predicted by the frame compensation control module, the SurfaceFlinger may wait for the arrival of a next vsync signal. When the SurfaceFlinger receives the next vsync signal, the SurfaceFlinger may take the predictive image frame from the buffer of the predictive image frame for performing layer composition, generate an interface including the predictive image frame, and send the interface including the predictive image frame to a display for displaying.

After the frame compensation control module provides the buffer of the predictive image frame to the Surface-Flinger, the frame compensation control module may wait for the frame loss prediction module to send a next frame compensation instruction.

As shown in FIG. 12, the frame compensation control module may generate the predictive image frame in a frame extrapolation manner. To be specific, the frame compensation control module may generate the predictive image frame using a plurality of image frames that have been rendered by a gaming application via a GPU before frame compensation is performed.

For example, the gaming application has sequentially rendered the image frame N-1 and the image frame N via the GPU, and the frame loss prediction module determines that the image frame X needs to be generated after the image frame N. Therefore, the frame compensation control module may generate the image frame X based on the image frame N-1 and the image frame N that have been rendered. After the frame compensation control module generates the image frame X and sends the image frame X to the SurfaceFlinger, the gaming application continues to render an image frame N+1 via the GPU.

For another example, as shown in FIG. 10, the frame loss prediction module determines that the image frame 1 needs to be generated after the image frame A. Therefore, the frame compensation control module may generate the image frame 1 based on an image frame 0 and the image frame A that are adjacent and have been rendered.

Because the frame compensation control module generates the compensation frame using the plurality of image frames that have been rendered by the gaming application via the GPU before frame compensation is performed. Therefore, when the predictive image frame does not need to be rendered via the GPU, power consumption of the process of generating the predictive image frame is lower than power consumption of the process of rendering the original image frame.

In a possible implementation, when only one image frame has been rendered before the frame compensation time point, the frame compensation control module may abandon performing frame compensation.

In a possible implementation, when two image frames have been rendered before the frame compensation time point, and one of the two image frames that have been rendered is abnormal, the frame compensation control module may abandon performing frame compensation.

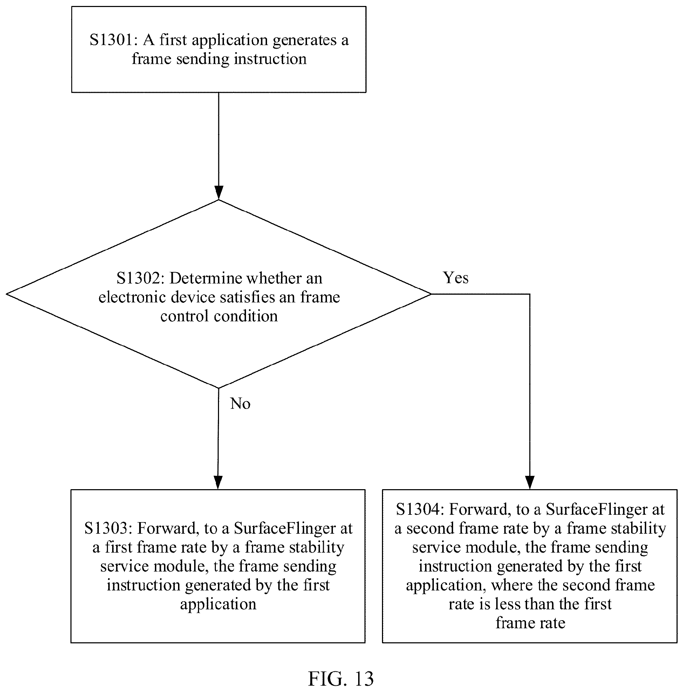

FIG. 13 illustrates an example of a schematic flowchart of a frame rate control method according to an embodiment of this application.

As shown in FIG. 13, the frame rate control method may be applied to an electronic device. The electronic device may include a first application, a frame stability service module, and a SurfaceFlinger. The frame stability service module is located between an application layer and the SurfaceFlinger. The frame rate control method may include the following steps.

S1301: The first application may generate a frame sending instruction.

The frame sending instruction may be used to provide a buffer of an image frame to the SurfaceFlinger.

The buffer may be used to store an image frame that is rendered by a GPU.

The SurfaceFlinger may be used to perform composition and display sending, after obtaining the frame sending instruction, on an image frame in a buffer indicated by the frame sending instruction.

For rendering of the first application on the image frame and a frame sending process, refer to the embodiments shown in FIG. 6A and FIG. 6B, and details are not described herein again.

S1302: Determine whether the electronic device satisfies a frame control condition.

If the frame control condition is not satisfied, step S1303 is performed. If the frame control condition is satisfied, step S1304 is performed.

S1303: The frame sending instruction generated by the first application is forwarded by the frame stability service module to the SurfaceFlinger at a first frame rate.

S1304: Forward, to the SurfaceFlinger at a second frame rate by the frame stability service module, the frame sending instruction generated by a first application, where the second frame rate is less than the first frame rate.

For example, the second frame rate may be 50 Hz, and the first frame rate may be 60 Hz.

The frame control condition may include that an image frame rate set by the first application is a full frame rate, a temperature of the electronic device is higher than a specified temperature threshold, a power level of the electronic device is lower than a specified power level, an occupancy rate of a central processing unit CPU of the electronic device is greater than a specified occupancy rate, and/or, the first application is a gaming application.

The first frame rate is less than or equal to the full frame rate, and the full frame rate is a maximum refresh rate of an image frame supported by the first application. For example, a maximum screen refresh rate of the electronic device is 60Hz. The maximum refresh rate of the image frame supported by the first application is 60 Hz.

In a possible implementation, the frame stability service module may receive, from a graphics interface, the frame sending instruction generated by the first application, where the graphics interface includes any one of the following: an open graphics library OpenGL, an open graphics library OpenGL ES for an embedded system, and a drawing application interface Vulkan. In this way, the first application does not need to be improved, and is suitably applied to the frame stability service module. Therefore, a frame sending rate can be controlled by the frame stability service module without perception of the first application. This reduces power consumption of the electronic device.

For specific content, refer to the embodiment shown in FIG. 6A. Details are not described herein again.

In a possible implementation, the frame stability service module may directly obtain, from the first application, the frame sending instruction generated by the first application. For specific content, refer to the embodiment shown in FIG. 6B. Details are not described herein again.

In a possible implementation, when the frame sending instruction generated by the first application is forwarded by the frame stability service module to the SurfaceFlinger at the second frame rate, composition and display sending of N image frames may be further performed by the SurfaceFlinger at the first frame rate, where the N image frames include M predictive image frames, and the M predictive image frames are generated based on a historical image frame. In this way, after the frame rate at which the SurfaceFlinger obtains the frame sending instruction to the second frame rate, composition and display sending of the image frame may be performed by the SurfaceFlinger at the first frame rate in a frame compensation manner. Therefore, when power consumption of the electronic device is reduced, the Surface-Flinger is prevented from losing frames.

M may be a difference between the first frame rate and the second frame rate. For example, the first frame rate may be 60 Hz, and the second frame rate may be 50 Hz. The SurfaceFlinger obtains 50 frame sending instructions per second, and the SurfaceFlinger may perform composition and display sending of image frames corresponding to the 50 frame sending instructions and 10 predictive image frames generated by performing frame compensation.

For details, refer to the embodiments shown in FIG. 9, FIG. 10, FIG. 11, and FIG. 12. Details are not described herein again.

In a possible implementation, when the frame stability service module does not control a frame, the frame stability service module may immediately forward the obtained first frame sending instruction of the first application to the SurfaceFlinger. When the frame stability service module obtains the first frame sending instruction generated by the first application, the frame stability service module may immediately forward the first frame sending instruction to Surface-Flinger. When the frame stability service module obtains a second frame sending instruction generated by the first application, the frame stabilization service may immediately forward the second frame sending instruction to the SurfaceFlinger.

In a possible implementation, when the frame stability service module does not control the frame, the frame stability service module may obtain some frame sending instructions of the first application, and delay forwarding some frame sending instructions to the SurfaceFlinger. When the frame stability service module obtains a third frame sending instruction generated by the first application, the third frame sending instruction is provided by the frame stability service module to the SurfaceFlinger. After the third frame sending instruction is forwarded by the frame stability service module to the SurfaceFlinger, a fourth frame sending instruction generated by the first application is obtained by the frame stability service module. After the frame stability service module obtains the fourth frame sending instruction generated by the first application, the frame stability service module delays forwarding the fourth frame sending instruction to the SurfaceFlinger.

Specifically, the frame stability service module may determine a first time interval between a time point when the frame stability service module obtains the fourth frame sending instruction and a time point when the frame stability service module obtains the third frame sending instruction. If the first time interval is less than a first frame sending interval, after the frame stability service module obtains the fourth frame sending instruction, a first duration forwarding the fourth frame sending instruction to the SurfaceFlinger is delayed by the frame stability service module, where the first frame sending interval is a frame control cycle, the frame control cycle is a reciprocal of second frame rate, and the first duration is a difference between the first frame sending interval and the first time interval.

If the first time interval is greater than or equal to the first frame sending interval, when obtaining the fourth frame sending instruction, the frame stability service module may immediately forward the fourth frame sending instruction to the SurfaceFlinger.

After the frame stability service module delays forwarding the fourth frame sending instruction to the Surface-Flinger, the frame stability service module may obtain a fifth frame sending instruction generated by the first application. The frame stability service module may determine a second time interval between a time point when the frame stability service module obtains the fifth frame sending instruction and the time point when the frame stability service module obtains the fourth frame sending instruction. If the second time interval is less than a second frame sending interval, after the frame stability service module obtains the fifth frame sending instruction, the frame stability service module may delay a second duration forwarding the fifth frame sending instruction to the SurfaceFlinger, where the second duration is a difference between the second frame sending interval and the second time interval, and the second frame sending interval is determined based on the first time interval, the first frame sending interval, and the frame control cycle.

The second frame sending interval is determined through the following formula:

$$TNb = \begin{cases} MIN\big(T1, TNa + (T1 - Ta)\big), Ta < T1 \text{ and } TNa < T1 \\ TNa, Ta < T1 \text{ and } TNa \geq T1 \\ MAX\big(0, TNa - (Ta - TNa)\big), Ta \geq T1 \end{cases}$$

where Ta is the first time interval, T1 is the frame control cycle, TNa is the first frame sending interval, and TNb is the second frame sending interval.

The first time interval is a rendering time of an image frame corresponding to the fourth frame sending instruction, and the first frame sending interval is a fastest frame sending time of the image frame corresponding to the fourth frame sending instruction. The first duration is a delay duration of the image frame corresponding to the fourth frame sending instruction. The second time interval is a rendering time of an image frame corresponding to the fifth frame sending instruction, and the second frame sending interval is a fastest frame sending time of the image frame corresponding to the fifth frame sending instruction. The second duration is a delay duration of the image frame corresponding to the fifth frame sending instruction.

Specifically, for explanations of the rendering time of the image frame, the fastest frame sending time of the image frame, the delay duration of the image frame, refer to the embodiments shown in FIG. 6A, FIG. 6B, FIG. 7, and FIG. 8. Details are not described herein again.

After the frame stability service module forwards the third frame sending instruction to the SurfaceFlinger, when the SurfaceFlinger obtains a first vertical synchronization vsync signal, composition and display sending of an image frame in the buffer indicated by the third frame sending instruction may be performed by the SurfaceFlinger. After the frame stability service module forwards the fourth frame sending instruction to the SurfaceFlinger, when the SurfaceFlinger obtains a second vsync signal, composition and display sending of the image frame in the buffer indicated by the third frame sending instruction may be performed by the SurfaceFlinger, where the second vsync signal is a next vsync signal of the first vsync signal.

If the frame stability service module determines that no buffer of an image frame on which composition and display sending are not performed exists in the SurfaceFlinger when the SurfaceFlinger obtains a third vsync signal and an expected time point when the frame stability service module obtains the fifth frame sending instruction generated by the first application is later than a time point when the SurfaceFlinger obtains the third vsync signal, before the SurfaceFlinger obtains the third vsync signal, a first predictive image frame is generated by the frame stability service module based on the image frame in the buffer indicated by the third frame sending instruction and an image frame in the buffer indicated by the fourth frame sending instruction. The first predictive image frame is provided by the frame stability service module to the SurfaceFlinger. When the SurfaceFlinger obtains the third vsync signal, the SurfaceFlinger performs composition and display sending of the first predictive image frame. The third vsync signal is a next vsync signal of the second vsync signal, a difference between the time point when the SurfaceFlinger obtains the third vsync signal and a time point when the SurfaceFlinger obtains the second vsync signal is equal to the difference between the time point when the SurfaceFlinger obtains the second vsync signal and a time point when the SurfaceFlinger obtains the first vsync signal.

A vertical synchronization signal thread (vsync thread) may periodically send a vsync signal to the Surface-Flinger.

Specifically, for content of a frame loss prediction process and a frame compensation process, refer to the embodiments shown in FIG. 9, FIG. 10, FIG. 11, and FIG. 12. Details are not described herein again.

An embodiment of this application provides a frame rate control method. An electronic device may control a frame rate at which an image frame of an application (for example, a gaming application) is sent, to enable the frame rate to be slightly lower than an original frame rate specified by the application (for example, from an original 60 Hz to 58 Hz). This reduces a rendering load and a frame sending load, thereby reducing the use of system resources on the electronic device, and reducing power consumption of the electronic device. Optionally, the electronic device may predict a frame loss time point of the image frame in advance in a process of controlling the frame rate of the image frame of the application (for example, a gaming application). Before the frame loss time point of the image frame, in view of the process of generating the image frames by the application, a predictive image frame is generated with a plurality of previously rendered image frames in an active frame insertion manner with a low load, and is inserted into a queue of image frames. In this way, a display frame rate of the image frame on the display may also reach the original frame rate. Therefore, when the performance of the application is ensured, the load and power consumption of the electronic device are reduced.

An embodiment of this application further provides a computer-readable storage medium. The computer-readable storage medium stores a computer program. When the computer program is executed by a processor, steps in the foregoing method embodiments can be implemented.

An embodiment of this application further provides a computer program product. The computer program product, when run on an electronic device, enables the electronic device to implement steps in the foregoing method embodiments.

An embodiment of this application further provides a chip system. The chip system includes a processor, where the processor is coupled to a memory, and the processor executes a computer program stored in the memory, so as to implement steps in any method embodiment of this application. The chip system may be a single chip or a chip module including a plurality of chips.

The term "user interface (user interface, UI), referred to as an interface" in the specification and the accompanying drawings of this application is a medium interface for interaction and information exchange between an application or an operating system and a user, and implements the conversion between an internal form of information and a form of the information acceptable to the user. A user interface of an application program is source code written by using a specific computer language such as Java or extensible markup language (extensible markup language, XML). The interface source code is parsed and rendered on a terminal device, and finally is presented as content that can be identified by a user, for example, a control such as a picture, a text, or a button. The control (control), also referred to as a widget (widget), is a basic element on the user interface. Typical controls include a toolbar (toolbar), a menu bar (menu bar), a text box (text box), a button (button), a scrollbar (scrollbar), a picture, and a text. Attributes and content of controls in an interface are defined by tags or nodes. For example, in XML, controls included in the interface are defined by nodes such as <Textview>, <ImgView>, and <VideoView>. One node corresponds to one control or one attribute in the interface. After being parsed and rendered, the node is presented as user-visible content. In addition, interfaces of many applications such as a hybrid application (hybrid application) usually further include a web page. A web page, also referred to as a page, may be understood as a special control embedded in an application program interface. A web page is source code written by using a specific computer language such as hyper text markup language (hyper text markup language, HTML), cascading style sheets (cascading style sheets, CSS), or JavaScript (JavaScript, JS). The web page source code may be loaded and displayed, as content that can be identified by a user, by a browser or a web page display component with a function similar to that of the browser. Specific content included in the web page is also defined by tags or nodes in the source code of the web page. For example, HTML defines elements and attributes of the web page through <p>, <img>, <video>, and <canvas>.

The user interface is usually represented in a form of a graphical user interface (graphic user interface, GUI), and is a user interface that is related to a computer operation and that is displayed in a graphic manner. The graphical user interface may be an interface element such as an icon, a window, or a control that is displayed on a display of an electronic device. The control may include visible interface elements such as an icon, a button, a menu, a tab, a text box, a dialog box, a status bar, a navigation bar, and a widget.

All or some of the foregoing embodiments may be implemented by software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedures or functions according to the embodiments of the present disclosure are achieved in whole or in part. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, coaxial-cable, optical-fiber, or digital-subscriber-line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive), or the like.

A person of ordinary skill in the art may understand that all or some of the procedures of the methods in embodiments may be implemented by a computer program instructing relevant hardware. The program may be stored in a computer-readable storage medium. When the program is executed, the procedures in the method embodiments may be performed. The storage medium includes: any medium that can store program code, such as a read only memory (ROM), a random access memory (RAM), a magnetic disk, and an optical disk.

The foregoing descriptions and embodiments are merely intended to describe the technical solutions of this application, rather than limit this application. Although this application is described in detail with reference to foregoing embodiments, a person of ordinary skill in the art should understand that modifications can still be made to the technical solutions described in foregoing embodiments or equivalent replacements can be made to some technical features thereof, without departing from the scope of the technical solutions of embodiments of this application.

## Claims

1. A frame rate control method, applied to an electronic device, wherein the electronic device comprises a frame stability service module, the frame stability service module is located between an application layer and a layer compositor SurfaceFlinger, a first application is installed in the electronic device, and the method comprises:

   generating, by the first application, a frame sending instruction; and
   when the electronic device does not satisfy a frame control condition, forwarding, to the SurfaceFlinger at a first frame rate by the frame stability service module, the frame sending instruction generated by the first application, wherein the frame sending instruction is configured to provide a layer buffer buffer of an image frame to the SurfaceFlinger, the buffer is configured to store an image frame rendered by a GPU, the SurfaceFlinger is configured to perform, after obtaining the frame sending instruction, composition and display sending of an image frame in the buffer indicated by the frame sending instruction; or
   when the electronic device satisfies the frame control condition, forwarding, to the SurfaceFlinger at a second frame rate by the frame stability service module, the frame sending instruction generated by the first application, wherein the first frame rate is greater than the second frame rate, the frame control condition comprises that an image frame rate set by the first application is a full frame rate, the first frame rate is less than or equal to the full frame rate, and the full frame rate is a maximum refresh rate of an image frame supported by the first application.

2. The method according to claim 1, wherein the method further comprises:
   obtaining, from a graphics interface by the frame stability service module, the frame sending instruction generated by the first application, wherein the graphics interface comprises any one of the following: an open graphics library OpenGL, an open graphics library OpenGL ES for an embedded system, and a drawing application interface Vulkan.

3. The method according to claim 1, wherein the frame control condition further comprises: a temperature of the electronic device is higher than a specified temperature threshold, a power level of the electronic device is lower than a specified power level, an occupancy rate of a central processing unit CPU of the electronic device is greater than a specified occupancy rate, and/or, the first application is a gaming application.

4. The method according to any one of claims 1 to 3, wherein when the frame sending instruction sent by the first application is forwarded by the frame stability service module to the SurfaceFlinger at the second frame rate, the method further comprises:
   performing, at the first frame rate by the SurfaceFlinger, composition and display sending of N image frames, wherein the N image frames comprise M predictive image frames, and the M predictive image frames are generated based on a historical image frame.

5. The method according to claim 4, wherein M is a difference between the first frame rate and the second frame rate.

6. The method according to claim 4 or 5, wherein the forwarding, to the SurfaceFlinger at a first frame rate by the frame stability service module, the frame sending instruction generated by the first application specifically comprises:

when a first frame sending instruction generated by the first application is obtained by the frame stability service module, forwarding, by the frame stability service module, the first frame sending instruction to the Surface-Flinger; and

after the first frame sending instruction is forwarded by the frame stability service module to the SurfaceFlinger, when the frame stability service module obtains a second frame sending instruction generated by the first application, forwarding, by the frame stability service module, the second frame sending instruction to the SurfaceFlinger.

7. The method according to any one of claims 4 to 6, wherein the forwarding, to the SurfaceFlinger at a second frame rate by the frame stability service module, the frame sending instruction generated by the first application specifically comprises:

when a third frame sending instruction generated by the first application is obtained by the frame stability service module, forwarding, by the frame stability service module, the third frame sending instruction to the Surface-Flinger;

after the third frame sending instruction is forwarded by the frame stability service module to the SurfaceFlinger, obtaining, by the frame stability service module, a fourth frame sending instruction generated by the first application; and

after the frame stability service module obtains the fourth frame sending instruction generated by the first application, delaying, by the frame stability service module, forwarding the fourth frame sending instruction to the SurfaceFlinger.

8. The method according to claim 7, wherein after the frame stability service module obtains the fourth frame sending instruction generated by the first application, the delaying, by the frame stability service module, forwarding the fourth frame sending instruction to the SurfaceFlinger specifically comprises:

determining, by the frame stability service module, a first time interval between a time point when the frame rate stabilization service module obtains the fourth frame-sending instruction and a time point when the frame rate stabilization service module obtains the third frame-sending instruction; and

if the first time interval is less than a first frame sending interval, after the frame stability service module obtains the fourth frame sending instruction, delaying, by the frame stability service module, for a first duration forwarding the fourth frame sending instruction to the SurfaceFlinger, wherein the first frame sending interval is a frame control cycle, the frame control cycle is a reciprocal of the second frame rate, and the first duration is a difference between the first frame sending interval and the first time interval.

9. The method according to claim 8, wherein the method further comprises:
if the first time interval is greater than or equal to the first frame sending interval, when the frame stability service module obtains the fourth frame sending instruction, forwarding, by the frame stability service module, the fourth frame sending instruction to the SurfaceFlinger.

10. The method according to any one of claims 7 to 9, wherein the method further comprises:

after the frame stability service module delays forwarding the fourth frame sending instruction to the Surface-Flinger, obtaining, by the frame stability service module, a fifth frame sending instruction generated by the first application;

determining, by the frame stability service module, a second time interval between a time point when the frame rate stabilization service module obtains the fifth frame-sending instruction and a time point when the frame rate stabilization service module obtains the fourth frame-sending instruction; and

if the second time interval is less than a second frame sending interval, after the frame stability service module obtains the fifth frame sending instruction, delaying, by the frame stability service module, for a second duration forwarding the fifth frame sending instruction to the SurfaceFlinger, wherein the second duration is a difference between the second frame sending interval and the second time interval, and the second frame sending interval is determined based on the first time interval, the first frame sending interval, and the frame control cycle.

11. The method according to claim 10, wherein the second frame sending interval is determined through the following formula:

$$TNb = \begin{cases} MIN\big(T1, TNa + (T1 - Ta)\big), Ta < T1 \text{ and } TNa < T1 \\ TNa, Ta < T1 \text{ and } TNa \geq T1 \\ MAX\big(0, TNa - (Ta - TNa)\big), Ta \geq T1 \end{cases}$$

wherein Ta is the first time interval, T1 is the frame control cycle, TNa is the first frame sending interval, and TNb is the second frame sending interval.

12. The method according to any one of claims 7 to 11, wherein the method further comprises:

after the frame stability service module forwards the third frame sending instruction to the SurfaceFlinger, when the SurfaceFlinger obtains a first vertical synchronization vsync signal, performing, by the SurfaceFlinger, composition and display sending of an image frame in the buffer indicated by the third frame sending instruction; and
after the frame stability service module forwards the fourth frame sending instruction to the SurfaceFlinger, when the SurfaceFlinger obtains a second vsync signal, performing, by the SurfaceFlinger, composition and display sending of the image frame in the buffer indicated by the third frame sending instruction, wherein the second vsync signal is a next vsync signal of the first vsync signal.

13. The method according to claim 12, wherein the method further comprises:

if determining, by the frame stability service module, that no buffer of an image frame on which composition and display sending are not performed exists in the SurfaceFlinger when the SurfaceFlinger obtains a third vsync signal and an expected time point when the frame stability service module obtains the fifth frame sending instruction generated by the first application is later than a time point when the SurfaceFlinger obtains the third vsync signal, before the SurfaceFlinger obtains the third vsync signal, generating, by the frame stability service module, a first predictive image frame based on the image frame in the buffer indicated by the third frame sending instruction and an image frame in the buffer indicated by the fourth frame sending instruction;
providing, by the frame stability service module, the first predictive image frame to the SurfaceFlinger; and
when the SurfaceFlinger obtains the third vsync signal, performing, by the SurfaceFlinger, composition and display sending of the first predictive image frame,
wherein the third vsync signal is a next vsync signal of the second vsync signal, a difference between the time point when the SurfaceFlinger obtains the third vsync signal and a time point when the SurfaceFlinger obtains the second vsync signal is equal to the difference between the time point when the SurfaceFlinger obtains the second vsync signal and a time point when the SurfaceFlinger obtains the first vsync signal.

14. An electronic device, comprising one or more processors and one or more memories, wherein the one or more memories are coupled to the one or more processors, the one or more memories are configured to store computer program code, the computer program code comprises computer instructions, and when the one or more processors execute the computer instructions, the electronic device is enabled to perform the method according to any one of claims 1 to 13.

15. A chip system, wherein the chip system is applied to an electronic device, the chip system comprises a processing circuit and an interface circuit, the interface circuit is configured to receive instructions and transmit the instructions to the processing circuit, and the processing circuit is configured to execute the instructions to perform the method according to any one of claims 1 to 13.

16. A computer-readable storage medium, comprising instructions, wherein when the instructions are run on an electronic device, the electronic device is enabled to perform the method according to any one of claims 1 to 13.

Electronic device 100

Antenna 1                                              Antenna 2

| Mobile communication module<br>2G/3G/4G/5G<br>[150] | Wireless communication module<br>BT/WLAN/GNSS/NFC/IR/FM<br>[160] |

| Speaker<br>[170A] | | | Sensor module [180] |
| Receiver<br>[170B] | Audio<br>module<br>[170] | | |
| Microphone<br>[170C] | | Processor<br>[110] | Gyroscope sensor<br>[180B] |
| Headset jack<br>[170D] | | | Acceleration sensor<br>[180E] |
| Displays 1 to N [194] | | | Touch sensor<br>[180K] |
| Camera lenses 1 to N<br>[193] | | | |
| Indicator [192] | | | |
| Motor [191] | | | |
| Button [190] | | | |
| Internal memory [121] | | | |
| SIM card interfaces<br>1 to N [195] | | | |
| External memory<br>interface [120] | | | |

FIG. 1

Vertical synchronization signal 0 (VSYNC0)
Vertical synchronization signal 1 (VSYNC1)
Vertical synchronization signal 2 (VSYNC2)
Vertical synchronization signal 3 (VSYNC3)
Vertical synchronization signal 4 (VSYNC4)

Application

Rendering instruction A | Frame sending instruction A | Render an image frame A
Rendering instruction B | Frame sending instruction B | Render an image frame B
Rendering instruction C | Frame sending instruction C | Render an image frame C
Rendering instruction D | Frame sending instruction D | Render an image frame D

Layer buffer (buffer)

Image frame A
Image frame B
Image frame C
Image frame D

Layer compositor (SurfaceFlinger) performs composition and display sending

Image frame A
Image frame B
Image frame C
Image frame D

FIG. 2

| Vertical synchronization signal 0 (VSYNC0) | Vertical synchronization signal 1 (VSYNC1) | **Vertical synchronization signal 2 (VSYNC2)** | Vertical synchronization signal 3 (VSYNC3) | Vertical synchronization signal 4 (VSYNC4) |
|---|---|---|---|---|

Rendering instruction A    Frame sending instruction A

Rendering instruction B    Frame sending instruction B

Rendering instruction C    Frame sending instruction C

Application

Frame rate control | Render an image frame A

Frame rate control | Render an image frame B

Frame rate control | Render an image frame C

Layer buffer (buffer)

Image frame A

Image frame B

Image frame C

Frame control time

Frame control time

Layer compositor (SurfaceFlinger) performs composition and display sending

Image frame A

**A frame may be lost**

Image frame B

Image frame C

FIG. 3

| | Vertical synchronization signal 0 (VSYNC0) | Vertical synchronization signal 1 (VSYNC1) | **Vertical synchronization signal 2 (VSYNC2)** | Vertical synchronization signal 3 (VSYNC3) | Vertical synchronization signal 4 (VSYNC4) |
|---|---|---|---|---|---|
| Application | Rendering instruction A    Frame sending instruction A | | Rendering instruction B    Frame sending instruction B | Rendering instruction C    Frame sending instruction C | |
| GPU rendering | Render an image frame A | | Render an image frame B | Render an image frame C | |
| Frame stability service module | Forward the frame sending instruction A <br> Frame rate control | **Generate an image frame 1** | Forward the frame sending instruction B <br> Frame rate control | Forward the frame sending instruction C <br> Frame rate control | |
| Layer buffer (buffer) | | Image frame A | **Image frame 1** | Image frame B | Image frame C |
| | | | Frame control time | Frame control time | |
| Layer compositor (SurfaceFlinger) performs composition and display sending | | | Image frame A | Image frame 1 | Image frame B | Image frame C |

FIG. 4

| Application layer | Gaming application | Video application | ... |

| Application framework (FWK) layer | **Layer compositor (SurfaceFlinger)** | **Frame stability service module** |

| Native (native) service layer | **Open graphics library/ open graphics library for embedded system (OpenGL/OpenGL ES)** | **Drawing application programming interface (Vulkan)** |

| Kernel (kernel) layer | Graphics processing unit driver (GPU Driver) |

FIG. 5

**Gaming application**

2. Rendering instruction

Render thread
(Render Thread)

1. Synchronize game image content

Main thread
(Main Thread)

5. Frame sending instruction

**Frame stability service module**

4. Rendering instruction

Frame rate control module

8. Frame sending time point of a current image frame and a fastest frame sending time of a next image frame

7. Delay or immediately send the frame sending instruction

Frame loss prediction module

11. Frame compensation instruction

10. Time stamp of the vsync signal and a buffer accumulation number of the image frame

Frame compensation control module

12. Historical image frame

Frame stability cache module

9. Buffer information of an image frame and a time stamp of a vsync signal

3. Rendering instruction

6. Frame sending instruction

13. Buffer of a compensation frame

SurfaceFlinger information obtaining module

**Graphics interface (OpenGL/ OpenGL ES/Vulkan)**

**Layer compositor (SurfaceFlinger)**

**GPU driver**

FIG. 6A

**Gaming application**

Render thread
(Render Thread)

1. Synchronize game
image content

Main thread
(Main Thread)

2. Rendering
instruction

5. Frame sending
instruction

6. Delay or
immediately
send the frame
sending
instruction

**Frame stability service module**

Frame rate control module

7. Frame sending time
point of a current image
frame and a fastest frame
sending time of a next
image frame

Frame loss prediction module

10. Frame compensation
instruction

9. Time stamp of the
vsync signal and a buffer
accumulation number of
the image frame

Frame compensation control
module

11. Historical
image frame

Frame stability cache module

3. Rendering
instruction

12. Buffer of a
compensation frame

8. Buffer information of
an image frame and a time
stamp of a vsync signal

Graphics interface (OpenGL/
OpenGL ES/Vulkan)

SurfaceFlinger information
obtaining module

4. Rendering
instruction

Layer compositor
(SurfaceFlinger)

GPU driver

FIG. 6B

S701: Obtain a rendering instruction that is configured to render a current image frame and that is sent by an application

↓

S702: Forward the rendering instruction to a GPU, and configure the GPU to render the current image frame

↓

S703: Obtain a frame sending instruction of the current image frame

↓

S704: Calculate a rendering time T of the current image frame

↓

S705: Determine whether the rendering time T of the current image frame is less than a fastest frame sending time of the current image frame

Yes →

S706: Delay forwarding the frame sending instruction of the current image frame to a SurfaceFlinger

No ↓

S707: Determine a fastest frame sending time of a next image frame

FIG. 7

EP 4 647 137 A1

Vertical synchronization signal 0 (VSYNC0) | Vertical synchronization signal 1 (VSYNC1) | **Vertical synchronization signal 2 (VSYNC2)** | Vertical synchronization signal 3 (VSYNC3) | Vertical synchronization signal 4 (VSYNC4) | Vertical synchronization signal 5 (VSYNC5)

Vsync signal cycle Pv

Frame control cycle T1 (larger than Pv)

**Gaming application**

Rendering instruction A | Frame sending instruction A | Rendering instruction B | Frame sending instruction B | Rendering instruction C | Frame sending instruction C | Rendering instruction D | Frame sending instruction D

**GPU rendering**

Render an image frame A | Render an image frame B | Render an image frame C | Render an image frame D

**Frame rate control module**

A rendering time Ta of the image frame A is less than TNa | Frame rate control | A rendering time Tb of the image frame B is less than TNb | Frame rate control | A rendering time Tc of the image frame C is larger than and equal to TNc | A rendering time Td of the image frame D is larger than and equal to TNd

Delay duration (TNa-Ta) | Delay duration (TNb-Tb) | Immediately forward the frame sending instruction C | Immediately forward the frame sending instruction D

**Layer buffer (buffer)**

Frame sending time point Mqa of the image frame A | Delay forwarding the frame sending instruction A | Image frame A | Frame sending time point Mqb of the image frame B | Delay forwarding the frame sending instruction B | Image frame B | Image frame C | Image frame D

**Layer compositor (SurfaceFlinger) performs composition and display sending**

Image frame A | **A frame may be lost** | Image frame B | Image frame C | Image frame D

FIG. 8

S901: Receive a first notification of a frame rate control module, where the first notification is configured to indicate to obtain a frame sending instruction of a current image frame

S902: Obtain a latest time stamp (Mm) of a vsync signal, a buffer accumulation number (bufferNum) of an image frame, and a fastest frame sending time (TN) of a next image frame in response to the first notification

S903: Determine whether the buffer accumulation number (bufferNum) of the image frame is greater than 0

If the buffer accumulation number (bufferNum) of the image frame is not greater than 0, the buffer accumulation number (bufferNum) of the image frame is 0

S905: Determine a frame sending time point (Mq) of the current image frame and a vsync cycle (Pv)

S906: Determine a fastest frame sending time point (Mn) of the next image frame based on the frame sending time point (Mq) of the current image frame and the fastest frame sending time point (TN) of the next frame

S907: Determine, based on the latest time stamp (Mm) and the vsync cycle (Pv) of the vsync signal, a time tamp (Mv) of the vsync signal for performing display sending of the next image frame

S908: Determine whether the fastest frame sending time point (Mn) of the next image frame is later than the time stamp (Mv) of the vsync signal for performing display sending of the next image frame

No

Yes

Yes

S904: Determine that frame compensation does not need to be performed

S909: Determine that frame compensation needs to be performed

FIG. 9

FIG. 10

S1101: Detect a frame compensation instruction, where the frame compensation instruction includes a frame compensation time point

S1102: Determine whether a current time arrives at the frame interpolation time point

No

Yes

S1103: Generate a predicted image frame based on a historically rendered image frame, store the predicted image frame in a buffer, and provide the buffer of the predicted image frame to a SurfaceFlinger

FIG. 11

Generate

| Image frame N–1 | Image frame N | Image frame X | Image frame N+1 |

FIG. 12

S1301: A first application generates a frame sending instruction

S1302: Determine whether an electronic device satisfies an frame control condition

Yes

No

S1303: Forward, to a SurfaceFlinger at a first frame rate by a frame stability service module, the frame sending instruction generated by the first application

S1304: Forward, to a SurfaceFlinger at a second frame rate by a frame stability service module, the frame sending instruction generated by the first application, where the second frame rate is less than the first frame rate

FIG. 13

## INTERNATIONAL SEARCH REPORT

| International application No. |
|---|
| **PCT/CN2024/082700** |

**A.   CLASSIFICATION OF SUBJECT MATTER**

A63F13/52(2014.01)i;   G06F1/3234(2019.01)i

According to International Patent Classification (IPC) or to both national classification and IPC

**B.   FIELDS SEARCHED**

Minimum documentation searched (classification system followed by classification symbols)

IPC: A63F13, G06F1

Documentation searched other than minimum documentation to the extent that such documents are included in the fields searched

Electronic data base consulted during the international search (name of data base and, where practicable, search terms used)

VEN, CNTXT, CNABS, CNKI: screen, application, layer, frame, instruct, refresh, buffer, module, interval, cycle, render, consumption, 屏幕, 应用, 图层, 帧, 指令, 刷新, 缓冲, 模块, 间隔, 周期, 渲染, 功耗

**C.   DOCUMENTS CONSIDERED TO BE RELEVANT**

| Category* | Citation of document, with indication, where appropriate, of the relevant passages | Relevant to claim No. |
|---|---|---|
| A | CN 114740965 A (GUANGDONG OPPO MOBILE COMMUNICATIONS CO., LTD.) 12 July 2022 (2022-07-12)<br>description, paragraphs [0026]-[0059], and figures 1-16 | 1-16 |
| A | CN 109104638 A (GUANGDONG OPPO MOBILE COMMUNICATIONS CO., LTD.) 28 December 2018 (2018-12-28)<br>entire document | 1-16 |
| A | CN 114461051 A (HONOR TERMINAL CO., LTD.) 10 May 2022 (2022-05-10)<br>entire document | 1-16 |
| A | CN 114579075 A (HONOR TERMINAL CO., LTD.) 03 June 2022 (2022-06-03)<br>entire document | 1-16 |
| A | CN 115904563 A (HONOR TERMINAL CO., LTD.) 04 April 2023 (2023-04-04)<br>entire document | 1-16 |
| A | US 2011096077 A1 (MICROSOFT CORP.) 28 April 2011 (2011-04-28)<br>entire document | 1-16 |

☑ Further documents are listed in the continuation of Box C.        ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **03 July 2024** | **05 July 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/082700** |

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | US 2011157191 A1 (NVIDIA CORP.) 30 June 2011 (2011-06-30)<br>entire document | 1-16 |
| A | US 2014092109 A1 (NVIDIA CORP.) 03 April 2014 (2014-04-03)<br>entire document | 1-16 |

Form PCT/ISA/210 (second sheet) (July 2022)

**INTERNATIONAL SEARCH REPORT**
Information on patent family members

International application No.

**PCT/CN2024/082700**

| Patent document cited in search report | | | Publication date (day/month/year) | Patent family member(s) | | | Publication date (day/month/year) |
|---|---|---|---|---|---|---|---|
| CN | 114740965 | A | 12 July 2022 | None | | | |
| CN | 109104638 | A | 28 December 2018 | None | | | |
| CN | 114461051 | A | 10 May 2022 | None | | | |
| CN | 114579075 | A | 03 June 2022 | None | | | |
| CN | 115904563 | A | 04 April 2023 | None | | | |
| US | 2011096077 | A1 | 28 April 2011 | US | 8593463 | B2 | 26 November 2013 |
| US | 2011157191 | A1 | 30 June 2011 | US | 9256265 | B2 | 09 February 2016 |
| US | 2014092109 | A1 | 03 April 2014 | TW | 201413639 | A | 01 April 2014 |
| | | | | TWI | 606418 | B | 21 November 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310622478